(19) **Europäisches Patentamt / European Patent Office / Office européen des brevets**

(11) **EP 4 451 630 A1**

(12) **EUROPEAN PATENT APPLICATION**
published in accordance with Art. 153(4) EPC

(43) Date of publication:
**23.10.2024 Bulletin 2024/43**

(21) Application number: **22923617.9**

(22) Date of filing: **26.12.2022**

(51) International Patent Classification (IPC):
**H04L 27/26** *(2006.01)*

(52) Cooperative Patent Classification (CPC):
**H04L 27/26**

(86) International application number:
**PCT/CN2022/142035**

(87) International publication number:
**WO 2023/142831 (03.08.2023 Gazette 2023/31)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **27.01.2022 CN 202210103513**

(71) Applicant: **Huawei Technologies Co., Ltd.
Shenzhen, Guangdong 518129 (CN)**

(72) Inventors:
• **LUO, Zhihu
Shenzhen, Guangdong 518129 (CN)**
• **CHEN, Jun
Shenzhen, Guangdong 518129 (CN)**
• **WU, Yiling
Shenzhen, Guangdong 518129 (CN)**
• **JIN, Zhe
Shenzhen, Guangdong 518129 (CN)**

(74) Representative: **Pfenning, Meinig & Partner mbB
Patent- und Rechtsanwälte
Theresienhöhe 11a
80339 München (DE)**

(54) **COMMUNICATION METHOD AND APPARATUS, AND DEVICE AND STORAGE MEDIUM**

(57) This application provides a communication method, an apparatus, a device, and a storage medium. The method includes: A first device generates a first OFDM time domain signal. The first OFDM time domain signal is used by a second device to perform backscatter communication. The first OFDM time domain signal occupies one subcarrier in frequency domain. The first device sends the first OFDM time domain signal to the second device. An OFDM waveform is used for the first OFDM time domain signal, and is consistent with a waveform of a signal in an OFDM system, so that a carrier backscatter-based communication technology is applied to the OFDM system. The first OFDM time domain signal occupies one subcarrier in frequency domain, and power is concentrated on the subcarrier. When the second device performs backscatter communication based on the first OFDM time domain signal, reliability of backscatter data is improved. In addition, when the first device receives uplink data transmitted by the second device in a backscatter communication manner, complexity of interference suppression performed when the first device demodulates the uplink data can be reduced.

200

First device — Second device

S210: Generate a first OFDM time domain signal, where the first OFDM time domain signal is used by the second device to perform backscatter communication, and the first OFDM time domain signal occupies one subcarrier in frequency domain

S220: Send the first OFDM time domain signal

S230: Send an uplink signal to the first device in a backscatter communication manner

FIG. 7

EP 4 451 630 A1

## Description

This application claims priority to Chinese Patent Application No. 202210103513.X, filed with the China National Intellectual Property Administration on January 27, 2022 and entitled "COMMUNICATION METHOD, APPARATUS, DEVICE, AND STORAGE MEDIUM", which is incorporated herein by reference in its entirety.

## TECHNICAL FIELD

This application relates to the field of communication technologies, and in particular, to a communication method, an apparatus, a device, and a storage medium.

## BACKGROUND

Both a long term evolution (Long Term Evolution, LTE) system and a new radio (New Radio, NR) system are orthogonal frequency division multiplexing (orthogonal frequency division multiplexing, OFDM) systems. With wide application of machine-type communication (machine-type communication, MTC) and internet of things (internet of things, IoT) communication, requirements of supporting a radio frequency identification (radio frequency identification, RFID) technology in an OFDM system to reduce IoT application costs and power consumption become increasingly strong. How to apply the RFID technology and a similar carrier backscatter-based communication technology to the OFDM system is an urgent problem to be resolved currently.

## SUMMARY

Embodiments of this application provide a communication method, an apparatus, a device, and a storage medium, to integrate RFID or a similar technology with various OFDM systems.

According to a first aspect, this application provides a communication method. The method may be performed by a terminal device or a network device, for example, a first device in the following example, or may be performed by a part (such as a chip, a chip system, or the like) disposed in a terminal device or a network device. This is not limited in this embodiment of this application. For ease of understanding, the following describes the method by using the first device as a body.

For example, the method includes: A first device generates a first OFDM time domain signal. The first OFDM time domain signal occupies one subcarrier in frequency domain. The first device sends the first OFDM time domain signal to a second device, so that the second device can perform backscatter communication based on the first OFDM time domain signal.

Based on this, an OFDM waveform is used for the first OFDM time domain signal used to implement communication between the first device and the second device, and is consistent with a waveform of a signal in another system implementing communication based on OFDM, so that an RFID technology and a similar carrier backscatter-based communication technology are applied to an OFDM system. Further, the first OFDM time domain signal occupies one subcarrier in frequency domain, and the first device may concentrate power on the subcarrier. When the second device subsequently performs backscatter communication based on the first OFDM time domain signal, reliability of backscatter data can be improved. When receiving uplink data transmitted by the second device in a backscatter communication manner, the first device needs to cancel, through interference suppression, interference of a carrier signal leaked by the first device and/or a carrier signal backscattered by an environment, to correctly demodulate the uplink data. The first OFDM time domain signal occupies one subcarrier in frequency domain, so that implementation complexity of the interference suppression of the first device can be reduced.

The first OFDM time domain signal may be a time domain signal with continuous phases. For example, the first OFDM time domain signal includes a first OFDM symbol and a second OFDM symbol in time domain, the first OFDM symbol is adjacent to the second OFDM symbol, and the first OFDM symbol and the second OFDM symbol are continuous in phase. It should be noted that the first OFDM symbol and the second OFDM symbol are any two adjacent OFDM symbols in the first OFDM time domain signal. This is merely used as an example for description herein, and should not be construed as a limitation on this application. For example, the first OFDM time domain signal may include a plurality of OFDM symbols, and every two adjacent OFDM symbols are continuous in phase. In a process in which the first device demodulates the uplink data, when the interference of the carrier signal leaked by the first device and/or the carrier signal backscattered by the environment is canceled through the interference suppression, the phases of the first OFDM time domain signal are continuous, so that the complexity of performing the interference suppression by the first device can be reduced.

A first design following any one of the foregoing examples is that the one subcarrier occupied by the first OFDM time domain signal in frequency domain may be a subcarrier whose frequency is zero. The subcarrier whose frequency is zero is also referred to as a direct current subcarrier. When the one subcarrier is a subcarrier whose frequency is zero, the phases of the first OFDM time domain signal are continuous.

Generally, a subcarrier whose frequency is zero is at a center frequency position in a first downlink frequency domain unit. Herein, the first downlink frequency domain unit may be a frequency domain resource (for example, a first frequency domain resource in the following) used for communication between the first device and the second device, or the first downlink frequency domain unit may be obtained by performing offset based on a frequency domain resource used for communication between the first device and the second device. The center frequency position of the first downlink frequency domain unit may alternatively be expressed as that an absolute value of a difference between a quantity of subcarriers whose frequencies are lower than the frequency of the subcarrier in the first downlink frequency domain unit and a quantity of subcarriers whose frequencies are higher than the frequency of the subcarrier in the first downlink frequency domain unit is 0 or 1.

To cause the subcarrier to be at the center frequency domain position of the first downlink frequency domain unit, an index $n_{\mathrm{PRB}}$ of a resource block in which the subcarrier whose frequency is zero is located and that is in the first downlink frequency domain unit meets the following formula: $n_{\mathrm{PRB}} = \left\lfloor \frac{N_{\mathrm{RB}}}{2} \right\rfloor$ , where $N_{\mathrm{RB}}$ is a quantity of resource blocks in the first downlink frequency domain unit, and ⌊ ⌋ represents rounding down.

An index of the subcarrier whose frequency is zero may be an index of the subcarrier in the foregoing one resource block, and the index may be determined based on parity of the quantity of resource blocks in the first downlink frequency domain unit. For example, when the quantity of resource blocks in the first downlink frequency domain unit is an odd number, the index of the subcarrier whose frequency is zero is equal to half of a quantity of subcarriers in one resource block, or the index of the subcarrier whose frequency is zero is equal to 6. When the quantity of resource blocks in the first downlink frequency domain unit is an even number, the index of the subcarrier whose frequency is zero is equal to 0 or a quantity of subcarriers in one resource block.

Similarly, to cause the subcarrier to be at the center frequency position of the first downlink frequency domain unit, the index of the subcarrier whose frequency is zero may be equal to half of a quantity of subcarriers in the first downlink frequency domain unit. In this case, the index of the subcarrier whose frequency is zero is an index of the subcarrier in the first downlink frequency domain unit.

In some other scenarios, to cause the subcarrier to be at the center frequency position of the first downlink frequency domain unit, the index of the subcarrier whose frequency is zero may be determined based on a first value and an offset. Herein, the first value may be a value determined based on the parity of the quantity of resource blocks in the first downlink frequency domain unit, or the first value may be half of the quantity of subcarriers in the first downlink frequency domain unit.

Optionally, the offset is determined based on at least one of the following:

a subcarrier spacing of the first OFDM time domain signal and a maximum subcarrier spacing; or
a preset value.

The foregoing three solutions are examples in which one subcarrier is at the center frequency position of the first downlink frequency domain unit, and the frequency of the subcarrier may be zero, so that the phases of the first OFDM time domain signal are continuous. A third solution may be applied to a case in which the first downlink frequency domain unit has a frequency offset relative to the first frequency domain resource.

A second design following any one of the foregoing examples is that the first OFDM time domain signal does not include a cyclic prefix. The first OFDM time domain signal does not include the cyclic prefix, so that the phases of the first OFDM time domain signal may be continuous. It may be understood that the first OFDM time domain signal does not include the cyclic prefix, in other words, any OFDM symbol in the first OFDM time domain signal does not include the cyclic prefix. Two adjacent OFDM symbols in the first OFDM time domain signal are connected in a head-to-tail manner in time domain. Because the first OFDM time domain signal does not include the cyclic prefix, the phases of the first OFDM time domain signal may be continuous.

When the first OFDM time domain signal does not include the cyclic prefix, the foregoing one subcarrier may be any subcarrier in a first downlink frequency domain unit. This is not limited in this application.

In some embodiments, when the first OFDM time domain signal does not include the cyclic prefix, the foregoing one subcarrier is at a center frequency position of the first downlink frequency domain unit, so that spectrum usage efficiency can be improved. In this case, to cause the subcarrier to be at the center frequency domain position of the first downlink frequency domain unit, an index $n_{\mathrm{PRB}}$ of a resource block in which the subcarrier is located and that is in the first downlink frequency domain unit meets the following formula: $n_{\mathrm{PRB}} = \left\lfloor \frac{N_{\mathrm{RB}}}{2} \right\rfloor$ , where $N_{\mathrm{RB}}$ is a quantity of resource blocks in the first downlink frequency domain unit, and L J represents rounding down.

An index of the subcarrier may be determined based on parity of the quantity of resource blocks in the first downlink frequency domain unit. For example, when the quantity of resource blocks in the first downlink frequency domain unit is an odd number, the index of the subcarrier is equal to half of a quantity of subcarriers in the resource block. When the quantity of resource blocks in the first downlink frequency domain unit is an even number, the index of the subcarrier is equal to 0 or a quantity of subcarriers in the resource block.

Similarly, to cause the subcarrier to be at the center frequency position of the first downlink frequency domain unit, the index of the subcarrier may be equal to half of a quantity of subcarriers in the first downlink frequency domain unit.

In some other scenarios, to cause the subcarrier to be at the center frequency position of the first downlink frequency domain unit, the index of the subcarrier may be determined based on a first value and an offset. Herein, the first value may be a value determined based on the parity of the quantity of resource blocks in the first downlink frequency domain unit, or the first value may be half of the quantity of subcarriers in the first downlink frequency domain unit.

Optionally, the offset is determined based on at least one of the following:

a subcarrier spacing of the first OFDM time domain signal and a maximum subcarrier spacing; or
a preset value.

The foregoing three solutions are examples in which one subcarrier is at the center frequency position of the first downlink frequency domain unit, and spectrum usage efficiency can be improved by using each solution. A third solution may be applied to a case in which the first downlink frequency domain unit has a frequency offset relative to a first frequency domain resource.

A third design following any one of the foregoing examples is that the first OFDM time domain signal includes a cyclic prefix, in other words, any OFDM symbol in the first OFDM time domain signal includes the cyclic prefix. The first OFDM time domain signal includes the cyclic prefix, and this easily causes phase discontinuity of the first OFDM time domain signal.

In some embodiments, the first device enables the phases of the first OFDM time domain signal to be continuous through phase compensation. The first OFDM time domain signal may include a plurality of OFDM time domain symbols. The following uses a first OFDM symbol and a second OFDM symbol in the first OFDM time domain signal as an example for description.

For example, a time domain start position of the second OFDM symbol is determined based on a time domain start position of the first OFDM symbol, an index of the second OFDM symbol in a first time domain resource, and duration of the first OFDM symbol; and the index of the second OFDM symbol in the first time domain resource is an integer greater than or equal to 0. Based on this, an initial phase of the second OFDM symbol may be a sum of an initial phase of the first OFDM symbol and a phase change of the first OFDM symbol in corresponding duration, and the second OFDM symbol and the first OFDM symbol may be continuous in phase based on a recursive relationship. It may be understood that the first OFDM symbol and the second OFDM symbol are any two adjacent OFDM symbols in the first OFDM time domain signal. In other words, all OFDM symbols of the first OFDM time domain signal in the first time domain resource may be continuous in phase based on the foregoing recursive relationship, and therefore, the phases of the first OFDM time domain signal are continuous in the first time domain resource.

Optionally, the first time domain resource is a time domain resource used to transmit the first OFDM time domain signal; or the first time domain resource is at least one subframe. A difference lies in the following. Symbol-by-symbol phase compensation is performed on the first OFDM time domain signal based on an index of an OFDM symbol in the at least one subframe. This facilitates compatibility between a passive IoT and the OFDM system. However, symbol-by-symbol phase compensation is performed on the first OFDM time domain signal based on an index of an OFDM symbol in the time domain resource used to transmit the first OFDM time domain signal. When the index of the OFDM symbol is 0, an initial phase (that is, an initial phase) of the first OFDM time domain signal is 0, and the initial phase of the first OFDM time domain signal does not need to be determined, so that operation complexity of the phase compensation can be reduced.

In the foregoing third design, when the first OFDM time domain signal includes the cyclic prefix, the foregoing one subcarrier may be any subcarrier in the first downlink frequency domain unit. This is not limited in this application.

In some embodiments, when the first OFDM time domain signal includes the cyclic prefix, the foregoing one subcarrier is at a center frequency position of the first downlink frequency domain unit, so that spectrum usage efficiency can be improved. In this case, the index of the subcarrier is the same as the index of the subcarrier in the foregoing second design. Details are not described herein again.

The first device may map an element A to the foregoing one subcarrier through subcarrier mapping, to generate the first OFDM time domain signal. Optionally, before the subcarrier mapping, the first device may start transform precoding, or perform DFT extension. Certainly, before the subcarrier mapping, the first device may not need to perform transform precoding, or may not perform DFT extension.

For example, when the first device starts the transform precoding, the first device may perform the transform precoding on a first sequence, to obtain a second sequence. One element (for example, the foregoing element A) in the second sequence is non-zero, and an element other than the element in the second sequence is zero. Further, the first device maps the non-zero element in the second sequence to the foregoing one subcarrier, to generate the first OFDM time domain signal. Optionally, in the first downlink frequency domain unit, an element carried on each subcarrier other than the subcarrier is zero.

In some embodiments, the first device generates a second OFDM time domain signal, and the second OFDM time domain signal is used to transmit downlink data. An OFDM waveform is used for the second OFDM time domain signal, and is consistent with a waveform of a signal in another system implementing communication based on OFDM, so that the RFID technology and the similar carrier backscatter-based communication technology are applied to the OFDM system. Further, the second OFDM time domain signal occupies the first downlink frequency domain unit in frequency domain, and the absolute value of the difference between the quantity of subcarriers whose frequencies are lower than the frequency of one subcarrier in the first downlink frequency domain unit and the quantity of subcarriers whose frequencies are higher than the frequency of one subcarrier in the first downlink frequency domain unit is 0 or 1, so that the subcarrier occupied by the first OFDM time domain signal is at the center frequency position of the first downlink frequency domain unit occupied by the second OFDM time domain signal. In this way, the spectrum usage efficiency is improved.

In some embodiments, the first downlink frequency domain unit does not include a subcarrier with a lowest frequency in the first frequency domain resource, and the first frequency domain resource is used by the first device to communicate with the second device; or the first downlink frequency domain unit includes each subcarrier on which frequency offset is performed based on the preset value in the first frequency domain resource. In this way, the first downlink frequency domain unit is center-symmetric about one subcarrier carrying the first OFDM time domain signal, so that the frequency usage efficiency is improved.

In some embodiments, the first device sends the first OFDM time domain signal to the second device, and the second device may send an uplink signal to the first device in a backscatter communication manner in a process of receiving the first OFDM time domain signal.

It may be understood that, when the first device finishes sending the first OFDM time domain signal to the second device, the second device stops sending the uplink signal because the second device loses a carrier signal that can be used for backscatter. Similarly, before receiving the first OFDM time domain signal sent by the first device, the second device cannot send the uplink signal to the first device in the backscatter communication manner. In other words, a time domain resource occupied for sending the uplink signal to the first device by the second device in the backscatter communication manner should be a subset of the time domain resource occupied for sending the first OFDM time domain signal to the second device by the first device.

A time domain start position of the uplink signal is later than a time domain start position of the first OFDM time domain signal, and/or a time domain end position of the uplink signal is earlier than a time domain end position of the first OFDM time domain signal. For example, there is an interval of a first time domain length T1 between the time domain start position of the uplink signal and the time domain start position of the first OFDM time domain signal, and/or there is an interval of a second time domain length T2 between the time domain end position of the uplink signal and the time domain end position of the first OFDM time domain signal.

Optionally, to improve passive IoT transmission reliability, the first time domain length T1 should be related to at least one of the following:

      a transmission delay between the first device and the second device;
      time for processing the first OFDM time domain signal by the second device; and
      time for generating the uplink signal by the second device (for example, time for preparing uplink data that needs to be backscattered).

The second time domain length T2 should be related to at least one of the following:

      time for processing the received uplink signal by the first device; and
      time for preparing, by the first device, a first OFDM time domain signal that needs to be sent subsequently.

According to a second aspect, an embodiment of this application provides a communication method. The method includes: A second device receives a first OFDM time domain signal from a first device. The first OFDM time domain signal occupies one subcarrier in frequency domain. The second device sends an uplink signal to the first device in a backscatter communication manner. A radio frequency carrier of the uplink signal is determined based on a radio frequency carrier of the first OFDM time domain signal.

In a possible implementation, the radio frequency carrier of the uplink signal is the same as the radio frequency carrier of the first OFDM time domain signal, or an offset value exists between the radio frequency carrier of the uplink signal and the radio frequency carrier of the first OFDM time domain signal.

In a possible implementation, a frequency of the subcarrier is zero.

In a possible implementation, the first OFDM time domain signal does not include a cyclic prefix.

In a possible implementation, the first OFDM time domain signal includes a cyclic prefix.

In a possible implementation, the first OFDM time domain signal includes a first OFDM symbol and a second OFDM symbol in time domain, the first OFDM symbol is adjacent to the second OFDM symbol, and the first OFDM symbol and the second OFDM symbol are continuous in phase.

In a possible implementation, a time domain start position of the second OFDM symbol is determined based on a time domain start position of the first OFDM symbol, an index of the second OFDM symbol in a first time domain resource, and duration of the first OFDM symbol; and the index of the second OFDM symbol in the first time domain resource is an integer greater than or equal to 0.

In a possible implementation, the first time domain resource is a time domain resource used to transmit the first OFDM time domain signal.

In a possible implementation, the first time domain resource is at least one subframe.

In a possible implementation, the subcarrier is located in a first downlink frequency domain unit. An absolute value of a difference between a quantity of subcarriers whose frequencies are lower than the frequency of the subcarrier in the first downlink frequency domain unit and a quantity of subcarriers whose frequencies are higher than the frequency of the subcarrier in the first downlink frequency domain unit is 0 or 1. The first downlink frequency domain unit is used by the first device to communicate with the second device.

In a possible implementation, an index of the subcarrier is a first value; or an index of the subcarrier is a second value, and the second value is determined based on a first value and an offset.

In a possible implementation, the first value is determined based on parity of a quantity of resource blocks in the first downlink frequency domain unit.

In a possible implementation, an index of a resource block in which the subcarrier is located and that is in the first downlink frequency domain unit meets the following formula: $n_{\mathrm{PRB}} = \left\lfloor \frac{N_{\mathrm{RB}}}{2} \right\rfloor$ , where $N_{\mathrm{RB}}$ is the quantity of resource blocks in the first downlink frequency domain unit, and L J represents rounding down.

In a possible implementation, when the quantity of resource blocks in the first downlink frequency domain unit is an odd number, the first value is equal to half of a quantity of subcarriers in one resource block or the first value is equal to 6; or when the quantity of resource blocks in the first downlink frequency domain unit is an even number, the first value is equal to zero or a quantity of subcarriers in one resource block.

In a possible implementation, the first value is equal to half of a quantity of subcarriers in a first downlink frequency domain unit.

In a possible implementation, the second value is a sum of the first value and the offset, and the offset is determined based on at least one of the following: a subcarrier spacing of the first OFDM time domain signal and a maximum subcarrier spacing; or a preset value.

In a possible implementation, in the first downlink frequency domain unit, an element carried on each subcarrier other than the subcarrier is zero.

In a possible implementation, the method further includes: The second device receives a second OFDM time domain signal from the first device. The second OFDM time domain signal is used to transmit downlink data, and the second OFDM time domain signal occupies a first downlink frequency domain unit in frequency domain. The absolute value of the difference between the quantity of subcarriers whose frequencies are lower than the frequency of the subcarrier in the first downlink frequency domain unit and the quantity of subcarriers whose frequencies are higher than the frequency of the subcarrier in the first downlink frequency domain unit is 0 or 1.

In a possible implementation, the first downlink frequency domain unit does not include a subcarrier with a lowest frequency in a first frequency domain resource, and the first frequency domain resource is used by the first device to communicate with the second device; or the first downlink frequency domain unit includes each subcarrier on which frequency offset is performed based on the preset value in the first frequency domain resource.

In a possible implementation, the method further includes: The second device sends the uplink signal to the first device. A time domain start position of the uplink signal is later than a time domain start position of the first OFDM time domain signal, and/or a time domain end position of the uplink signal is earlier than a time domain end position of the first OFDM time domain signal.

In a possible implementation, there is an interval of a first time domain length between the time domain start position of the uplink signal and the time domain start position of the first OFDM time domain signal, and/or there is an interval of a second time domain length between the time domain end position of the uplink signal and the time domain end position of the first OFDM time domain signal.

For beneficial effects of the communication method provided in the second aspect and the possible implementations of the second aspect, refer to beneficial effects brought by the first aspect and the possible implementations of the first aspect. Details are not described herein again.

According to a third aspect, an embodiment of this application provides a communication apparatus. The communication apparatus includes: a processing unit, configured to generate a first orthogonal frequency division multiplexing OFDM time domain signal, where the first OFDM time domain signal is used by a second device to perform backscatter communication, and the first OFDM time domain signal occupies one subcarrier in frequency domain; and a transceiver unit, configured to send the first OFDM time domain signal to the second device.

In a possible implementation, a frequency of the subcarrier is zero.

In a possible implementation, the first OFDM time domain signal does not include a cyclic prefix.

In a possible implementation, the first OFDM time domain signal includes a cyclic prefix.

In a possible implementation, the first OFDM time domain signal includes a first OFDM symbol and a second OFDM symbol in time domain, the first OFDM symbol is adjacent to the second OFDM symbol, and the first OFDM symbol and the second OFDM symbol are continuous in phase.

In a possible implementation, a time domain start position of the second OFDM symbol is determined based on a time domain start position of the first OFDM symbol, an index of the second OFDM symbol in a first time domain resource, and duration of the first OFDM symbol; and the index of the second OFDM symbol in the first time domain resource is an integer greater than or equal to 0.

In a possible implementation, the first time domain resource is a time domain resource used to transmit the first OFDM time domain signal.

In a possible implementation, the first time domain resource is at least one subframe.

In a possible implementation, the processing unit is specifically configured to perform transform precoding on a first sequence, to obtain a second sequence. One element in the second sequence is non-zero, an element other than the element in the second sequence is zero, and the non-zero element in the second sequence is mapped to the subcarrier.

In a possible implementation, the subcarrier is located in a first downlink frequency domain unit. An absolute value of a difference between a quantity of subcarriers whose frequencies are lower than the frequency of the subcarrier in the first downlink frequency domain unit and a quantity of subcarriers whose frequencies are higher than the frequency of the subcarrier in the first downlink frequency domain unit is 0 or 1. The first downlink frequency domain unit is used by the communication apparatus to communicate with the second device.

In a possible implementation, an index of the subcarrier is a first value; or an index of the subcarrier is a second value, and the second value is determined based on a first value and an offset.

In a possible implementation, the first value is determined based on parity of a quantity of resource blocks in the first downlink frequency domain unit.

In a possible implementation, an index of a resource block in which the subcarrier is located and that is in the first downlink frequency domain unit meets the following formula: $n_{\mathrm{PRB}} = \left\lfloor \dfrac{N_{\mathrm{RB}}}{2} \right\rfloor$, where $N_{\mathrm{RB}}$ is the quantity of resource blocks in the first downlink frequency domain unit, and $\lfloor \ \rfloor$ represents rounding down.

In a possible implementation, when the quantity of resource blocks in the first downlink frequency domain unit is an odd number, the first value is equal to half of a quantity of subcarriers in one resource block or the first value is equal to 6; or when the quantity of resource blocks in the first downlink frequency domain unit is an even number, the first value is equal to zero or a quantity of subcarriers in one resource block.

In a possible implementation, the first value is equal to half of a quantity of subcarriers in a first downlink frequency domain unit.

In a possible implementation, the second value is a sum of the first value and the offset, and the offset is determined based on at least one of the following: a subcarrier spacing of the first OFDM time domain signal and a maximum subcarrier spacing; or a preset value.

In a possible implementation, in the first downlink frequency domain unit, an element carried on each subcarrier other than the subcarrier is zero.

In a possible implementation, the processing unit is further configured to generate a second OFDM time domain signal. The second OFDM time domain signal is used to transmit downlink data, and the second OFDM time domain signal occupies the first downlink frequency domain unit in frequency domain. The absolute value of the difference between the quantity of subcarriers whose frequencies are lower than the frequency of the subcarrier in the first downlink frequency domain unit and the quantity of subcarriers whose frequencies are higher than the frequency of the subcarrier in the first downlink frequency domain unit is 0 or 1.

In a possible implementation, the first downlink frequency domain unit does not include a subcarrier with a lowest frequency in a first frequency domain resource, and the first frequency domain resource is used by the communication apparatus to communicate with the second device; or the first downlink frequency domain unit includes each subcarrier on which frequency offset is performed based on the preset value in the first frequency domain resource.

In a possible implementation, the transceiver unit is further configured to receive an uplink signal from the second device. A time domain start position of the uplink signal is later than a time domain start position of the first OFDM time domain signal, and/or a time domain end position of the uplink signal is earlier than a time domain end position of the first OFDM time domain signal.

In a possible implementation, there is an interval of a first time domain length between the time domain start position of the uplink signal and the time domain start position of the first OFDM time domain signal, and/or there is an interval of a second time domain length between the time domain end position of the uplink signal and the time domain end position of the first OFDM time domain signal.

For beneficial effects of the communication apparatus provided in the third aspect and the possible implementations of the third aspect, refer to beneficial effects brought by the first aspect and the possible implementations of the first aspect. Details are not described herein again.

According to a fourth aspect, an embodiment of this application provides a communication apparatus. The communication apparatus includes a transceiver unit. The transceiver unit is configured to receive a first OFDM time domain signal from a first device. The first OFDM time domain signal occupies one subcarrier in frequency domain. The transceiver unit is further configured to send an uplink signal to the first device in a backscatter communication manner. A radio frequency carrier of the uplink signal is determined based on a radio frequency carrier of the first OFDM time domain signal.

In a possible implementation, the radio frequency carrier of the uplink signal is the same as the radio frequency carrier of the first OFDM time domain signal, or an offset value exists between the radio frequency carrier of the uplink signal and the radio frequency carrier of the first OFDM time domain signal.

In a possible implementation, a frequency of the subcarrier is zero.

In a possible implementation, the first OFDM time domain signal does not include a cyclic prefix.

In a possible implementation, the first OFDM time domain signal includes a cyclic prefix.

In a possible implementation, the first OFDM time domain signal includes a first OFDM symbol and a second OFDM symbol in time domain, the first OFDM symbol is adjacent to the second OFDM symbol, and the first OFDM symbol and the second OFDM symbol are continuous in phase.

In a possible implementation, a time domain start position of the second OFDM symbol is determined based on a time domain start position of the first OFDM symbol, an index of the second OFDM symbol in a first time domain resource, and duration of the first OFDM symbol; and the index of the second OFDM symbol in the first time domain resource is an integer greater than or equal to 0.

In a possible implementation, the first time domain resource is a time domain resource used to transmit the first OFDM time domain signal.

In a possible implementation, the first time domain resource is at least one subframe.

In a possible implementation, the subcarrier is located in a first downlink frequency domain unit. An absolute value of a difference between a quantity of subcarriers whose frequencies are lower than the frequency of the subcarrier in the first downlink frequency domain unit and a quantity of subcarriers whose frequencies are higher than the frequency of the subcarrier in the first downlink frequency domain unit is 0 or 1. The first downlink frequency domain unit is used by the first device to communicate with the communication apparatus.

In a possible implementation, an index of the subcarrier is a first value; or an index of the subcarrier is a second value, and the second value is determined based on a first value and an offset.

In a possible implementation, the first value is determined based on parity of a quantity of resource blocks in the first downlink frequency domain unit.

In a possible implementation, an index of a resource block in which the subcarrier is located and that is in the first downlink frequency domain unit meets the following formula: $n_{\mathrm{PRB}} = \left\lfloor \dfrac{N_{\mathrm{RB}}}{2} \right\rfloor$, where $N_{\mathrm{RB}}$ is the quantity of resource blocks in the first downlink frequency domain unit, and $\lfloor \ \rfloor$ represents rounding down.

In a possible implementation, when the quantity of resource blocks in the first downlink frequency domain unit is an odd number, the first value is equal to half of a quantity of subcarriers in one resource block or the first value is equal to 6; or when the quantity of resource blocks in the first downlink frequency domain unit is an even number, the first value is equal to zero or a quantity of subcarriers in one resource block.

In a possible implementation, the first value is equal to half of a quantity of subcarriers in a first downlink frequency domain unit.

In a possible implementation, the second value is a sum of the first value and the offset, and the offset is determined based on at least one of the following: a subcarrier spacing of the first OFDM time domain signal and a maximum subcarrier spacing; or a preset value.

In a possible implementation, in the first downlink frequency domain unit, an element carried on each subcarrier other than the subcarrier is zero.

In a possible implementation, the transceiver unit is further configured to receive a second OFDM time domain signal from the first device. The second OFDM time domain signal is used to transmit downlink data, and the second OFDM time domain signal occupies the first downlink frequency domain unit in frequency domain. The absolute value of the difference between the quantity of subcarriers whose frequencies are lower than the frequency of the subcarrier in the first downlink frequency domain unit and the quantity of subcarriers whose frequencies are higher than the frequency of the subcarrier in the first downlink frequency domain unit is 0 or 1.

In a possible implementation, the first downlink frequency domain unit does not include a subcarrier with a lowest frequency in a first frequency domain resource, and the first frequency domain resource is used by the first device to communicate with the communication apparatus; or the first downlink frequency domain unit includes each subcarrier on which frequency offset is performed based on the preset value in the first frequency domain resource.

In a possible implementation, the transceiver unit is further configured to send the uplink signal to the first device. A time domain start position of the uplink signal is later than a time domain start position of the first OFDM time domain signal, and/or a time domain end position of the uplink signal is earlier than a time domain end position of the first OFDM time domain signal.

In a possible implementation, there is an interval of a first time domain length between the time domain start position of the uplink signal and the time domain start position of the first OFDM time domain signal, and/or there is an interval of a second time domain length between the time domain end position of the uplink signal and the time domain end position of the first OFDM time domain signal.

For beneficial effects of the communication apparatus provided in the fourth aspect and the possible implementations of the fourth aspect, refer to beneficial effects brought by the first aspect and the possible implementations of the first aspect. Details are not described herein again.

According to a fifth aspect, an embodiment of this application provides a communication device, including a processor and a memory. The memory is configured to store a computer program, and the processor is configured to invoke and run the computer program stored in the memory, to perform the method in the first aspect, the second aspect, or the possible implementations.

According to a sixth aspect, an embodiment of this application provides a chip, including a processor, configured to invoke computer instructions from a memory and run the computer instructions, so that a device in which the chip is installed performs the method in the first aspect, the second aspect, or the possible implementations.

According to a seventh aspect, an embodiment of this application provides a computer-readable storage medium, configured to store computer program instructions. The computer program causes a computer to perform the method in the first aspect, the second aspect, or the possible implementations.

According to an eighth aspect, an embodiment of this application provides a computer program product, including computer program instructions. The computer program instructions cause a computer to perform the method in the first aspect, the second aspect, or the possible implementations.

According to a ninth aspect, an embodiment of this application provides an apparatus, including a logic circuit and an input/output interface. The input/output interface is configured to receive a signal from a communication apparatus other than the apparatus and transmit the signal to the logic circuit, or send a signal from the logic circuit to a communication apparatus other than the apparatus. The logic circuit is configured to execute code instructions to implement the method in the first aspect, the second aspect, or the possible implementations.

According to a tenth aspect, an embodiment of this application provides a communication system, including the apparatus in the first aspect, the second aspect, or the possible implementations.

**BRIEF DESCRIPTION OF DRAWINGS**

FIG. 1 is a diagram of a communication system applicable to a communication method according to an embodiment of this application;
FIG. 2a is a diagram of an RFID communication system according to this application;
FIG. 2b is a diagram of an RFID communication system having a split architecture according to this application;
FIG. 2c is a diagram of an RFID communication system having a centralized architecture according to this application;
FIG. 3 is an example of a diagram of a passive IoT downlink communication method;
FIG. 4 is an example of a diagram of an uplink communication method in passive IoT communication;
FIG. 5 is a diagram of a common resource block according to this application;
FIG. 6 is a diagram of a frequency domain position relationship between a bandwidth part and a carrier according to this application;
FIG. 7 is a schematic interaction flowchart of a communication method 200 according to an embodiment of this application;

FIG. 8a is a diagram of an orthogonal frequency division multiplexing transmission link according to this application;

FIG. 8b is a diagram of a discrete Fourier transform-spread-orthogonal frequency division multiplexing transmission link according to this application;

FIG. 9 is a diagram of a time domain signal according to this application;

FIG. 10a is a diagram of a time domain signal according to an embodiment of this application;

FIG. 10b is a diagram of another time domain signal according to an embodiment of this application;

FIG. 10c is a diagram of another time domain signal according to an embodiment of this application;

FIG. 11 is a diagram of a time domain position of a signal according to an embodiment of this application;

FIG. 12 is a schematic interaction flowchart of a communication method 300 according to an embodiment of this application;

FIG. 13a is a diagram of a downlink frequency domain unit according to an embodiment of this application;

FIG. 13b is a diagram of another downlink frequency domain unit according to an embodiment of this application;

FIG. 14 is a block diagram of a communication apparatus according to an embodiment of this application; and

FIG. 15 is another block diagram of a communication apparatus according to an embodiment of this application.

## DESCRIPTION OF EMBODIMENTS

The following describes technical solutions of this application with reference to the accompanying drawings.

A communication method provided in this application may be applied to various communication systems, for example, a global system of mobile communication (Global System of Mobile communication, GSM) system, a code division multiple access (Code Division Multiple Access, CDMA) system, a wideband code division multiple access (Wideband Code Division Multiple Access, WCDMA) system, a general packet radio service (General Packet Radio Service, GPRS), and a long term evolution (Long Term Evolution, LTE) system, an advanced long term evolution (Advanced long term evolution, LTE-A) system, a new radio (New Radio, NR) system, an evolved system of the NR system, an LTE-based access to unlicensed spectrum (LTE-based access to unlicensed spectrum, LTE-U) system, an NR-based access to unlicensed spectrum (NR-based access to unlicensed spectrum, NR-U) system, a non-terrestrial communication network (Non-Terrestrial Network, NTN) system, a universal mobile telecommunication system (Universal Mobile Telecommunication System, UMTS), a wireless local area network (Wireless Local Area Network, WLAN), wireless fidelity (Wireless Fidelity, Wi-Fi), another communication system, or the like. LTE and LTE-A are 4th-generation (4th-Generation, 4G) communication systems. The NR system and evolution thereof are 5th-generation (5th-Generation, 5G) communication systems.

In some embodiments, the communication system in embodiments of this application may be applied to a carrier aggregation (Carrier Aggregation, CA) scenario, may be applied to a dual connectivity (Dual Connectivity, DC) scenario, or may be applied to a standalone (Standalone, SA) networking scenario.

Embodiments are described with reference to a network device and a terminal device in embodiments of this application. The terminal device may also be referred to as user equipment (User Equipment, UE), an access terminal, a subscriber unit, a subscriber station, a mobile station, a remote station, a remote terminal, a mobile device, a user terminal, a terminal, a wireless communication device, a user agent, a user apparatus, or the like.

The terminal device may be a station (STATION, ST) in a WLAN, a cellular phone, a cordless phone, a session initiation protocol (Session Initiation Protocol, SIP) phone, a wireless local loop (Wireless Local Loop, WLL) station, a personal digital assistant (Personal Digital Assistant, PDA) device, a handheld device having a wireless communication function, a computing device, another processing device connected to a wireless modem, a vehicle-mounted device, a wearable device, a terminal device in a next-generation communication system such as an NR network, or a terminal device in a future evolved public land mobile network (Public Land Mobile Network, PLMN) network, or the like.

In embodiments of this application, the terminal device may be deployed on land, where the deployment includes indoor or outdoor, or handheld or vehicle-mounted deployment, may be deployed on water (for example, on a ship), or be deployed in air (for example, on an airplane, a balloon, a satellite, or the like).

In embodiments of this application, the terminal device may be a mobile phone (Mobile Phone), a Pad (Pad), a computer having a wireless transceiver function, a virtual reality (Virtual Reality, VR) terminal device, an augmented reality (Augmented Reality, AR) terminal device, a wireless terminal device in industrial control (industrial control), a wireless terminal device in self-driving (self-driving), a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like.

By way of example, and not limitation, in embodiments of this application, the terminal device may alternatively be a wearable device. The wearable device may also be referred to as a wearable intelligent device, and is a general term of a wearable device that is intelligently designed and developed for daily wear by using a wearable technology, for example, glasses, gloves, a watch, clothing, shoes, or the like. The wearable device is a portable device that can be directly worn on the body or integrated into clothes or an accessory of a user. The wearable device is not only a hardware device, but also implements a powerful function by using software support, data exchange, and cloud interaction. In a broad sense, the wearable intelligent device includes full-function and large-size devices that can implement complete or partial functions without depending on a smartphone, for example, a smartwatch, smart glasses, or the like, and devices that focuses on only a type of application function and needs to be used with another device such as a smartphone, for example, various smart bands and smart jewelry for monitoring physical symptoms, or the like.

In embodiments of this application, the network device may be a device configured to communicate with a mobile device. The network device may be an access point (Access Point, AP) in a WLAN, a base transceiver station (Base Transceiver Station, BTS) in a GSM or CDMA, may be a NodeB (NodeB, NB) in WCDMA, may be an evolved NodeB (Evolved NodeB, eNB or eNodeB) in LTE, a relay station, an access point, a vehicle-mounted device, a wearable device, a network device or a gNB (gNB) in an NR network, a network device in a future evolved PLMN network, a network device in an NTN network, or the like.

By way of example, and not limitation, in embodiments of this application, the network device may have a mobility characteristic. For example, the network device may be a mobile device. In some embodiments, the network device may be a satellite or a balloon station. For example, the satellite may be a low earth orbit (low earth orbit, LEO) satellite, a medium earth orbit (medium earth orbit, MEO) satellite, a geostationary earth orbit (geostationary earth orbit, GEO) satellite, a high elliptical orbit (High Elliptical Orbit, HEO) satellite, or the like. In some embodiments, the network device may alternatively be a base station disposed at a position such as land, water, or the like.

In embodiments of this application, the network device may provide a service for a cell, and the terminal device communicates with the network device by using a transmission resource (for example, a frequency domain resource, or referred to as a spectrum resource) used by the cell. The cell may be a cell corresponding to the network device (for example, a base station). The cell may be a macro base station, or may be a base station corresponding to a small cell (Small cell). The small cell herein may include: a metro cell (Metro cell), a micro cell (Micro cell), a pico cell (Pico cell), a femto cell (Femto cell), and the like. These small cells have characteristics of a small coverage area and low transmit power, and are suitable to provide a high-rate data transmission service.

It should be understood that specific forms of the network device and the terminal device are not limited in this application.

Embodiments of this application are particularly applicable to an OFDM system, for example, the foregoing LTE communication system, the NR communication system, or the like. Certainly, embodiments of this application are also applicable to various future evolved communication systems that are based on OFDM or a technology similar to the OFDM.

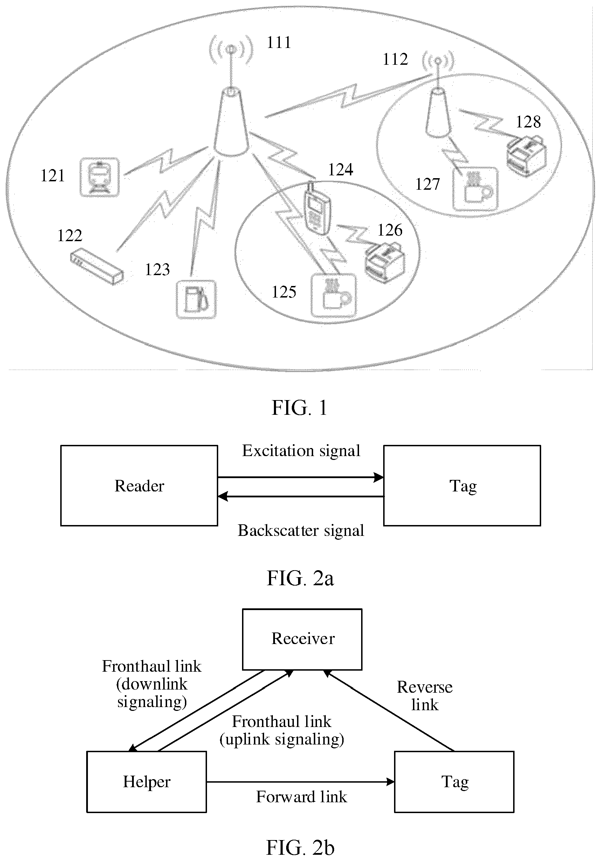

For ease of understanding embodiments of this application, a communication system applicable to embodiments of this application is first described in detail with reference to FIG. 1. FIG. 1 is a diagram of a communication system applicable to a communication method according to an embodiment of this application. As shown in FIG. 1, the communication system 100 may include a network device and a terminal device. There may be one or more network devices and one or more terminal devices, for example, network devices 111 and 112 and terminal devices 121 to 128 shown in FIG. 1. In the communication system 100, the network device 111 may communicate with one or more terminal devices of the terminal devices 121 to 126 through a radio air interface, and the network device 111 may communicate with one or more terminal devices of the terminal devices 127 and 128 by using the network device 112. In addition, the terminal devices 124 to 126 may form a communication system 101. In the communication system 101, the terminal device 124 may communicate with one or more terminal devices of the terminal devices 125 and 126 through a radio air interface. The network device 112 and the terminal devices 127 and 128 may form a communication system 102. In the communication system 102, the network device 112 may communicate with one or more terminal devices of the terminal devices 127 and 128 through a radio air interface.

It should be understood that the communication system 101 may be a subsystem of the communication system 100, or a communication system independent of the communication system 100; and the communication system 102 may be a subsystem of the communication system 100, or a communication system independent of the communication system 100.

It should be further understood that FIG. 1 is merely an example, and shows two network devices and eight terminal devices in the communication system 100, three terminal devices in the communication system 101, and one network device and two terminal devices in the communication system 102. However, this shall not constitute any limitation on this application. Any one of the foregoing communication systems may include more or fewer network devices, or include more or fewer terminal devices. This is not limited in this embodiment of this application.

With popularization of MTC in a 5G NR system and internet of things (Internet of Things, IoT) communication, more and more IoT devices have been deployed in people's life, for example, a smart water meter, a shared bicycle, a smart city, environment monitoring, a smart home, and forest fire prevention, other devices that are targeted at sensing and data collection, or the like. In the future, IoT devices are ubiquitous, and may be embedded with each clothing, package, and key. Almost all offline items become online with enablement of internet of things technologies. However, at the same time, a large quantity of IoT devices are widely distributed. Therefore, a process of implementing an internet of everything brings great challenges to the industry. The first challenge is a power supply problem. Currently, IoT is still mainly promoted by operators. An IoT module needs to use a standard cellular protocol to communicate with a base station. Because the base station needs to cover an area as large as possible, the IoT module needs to be able to perform communication when being far away from the base station. In this case, the IoT device still needs to consume a current of up to 30 mA during wireless communication, and therefore, a current IoT module still needs to work with a high-capacity battery. Consequently, it is difficult to make a size of the IoT module small, and costs of the IoT device are increased.

In addition, some low power consumption terminals play important roles in internet of things applications such as healthcare, a smart home, an industrial sensor, a wearable device, or the like. However, due to a limited size of such terminal, it is difficult to prolong running time of these devices by simply increasing a battery capacity. Therefore, to prolong a battery life of the terminal, power consumption of wireless communication needs to be reduced. A radio transceiver is one of the most power-consuming components.

Therefore, to further popularize the IoT, the IoT module is implanted in a human body or a smaller object, and in this case, a high-capacity battery cannot be matched. Instead, a smaller battery needs to be used or even a battery limitation needs to be completely eliminated, or a method for reducing power consumption of the radio transceiver is designed, to overcome a problem of limitation of costs, a size, power consumption, and the like of the IoT device. Therefore, in June 2021, at a R18 potential research direction seminar organized by 3GPP, internet of things enhancement technologies are discussed and it is disclosed that 5G-Advanced (5G-Advanced) starts from R18 and a passive (Passive) IoT and a WUR are introduced into the 5G NR system. The passive IoT emerges through inspiration from an RFID technology currently maturely used in a large quantity. Because a power module is not required, a size of a passive RFID product can reach a centimeter level or even a smaller level. In addition, the passive RFID product has a simple structure, low costs, a low fault rate, and a long service life.

The RFID technology is a non-contact automatic identification technology, and can automatically identify a target object and obtain related data by using a radio frequency signal. Generally, an RFID system includes a reader (reader) and a tag (tag). With reference to FIG. 2a, a reader sends an excitation signal to a tag to charge the tag, and the tag receives signaling sent by the reader, and sends a backscatter signal to the reader in a backscatter communication manner. In this manner, the reader may identify an identifier (identity document, ID) of the tag, and perform an operation on the tag, such as reading, writing, or the like.

It should be noted that the excitation signal sent by the reader to the tag may be a downlink signal or one type of a downlink signal in the following, and the backscatter signal may be an uplink signal or one type of an uplink signal in the following. The downlink signal is a carrier signal, and implementation in which the tag sends the backscatter signal to the reader in the backscatter communication manner may specifically be that the tag transmits the uplink signal by using a carrier provided by the downlink signal.

Currently, to extend an effective working distance of RFID, the following two manners are generally used.

Manner 1: A split architecture: With reference to FIG. 2b, a split reader includes a helper (helper) and a receiver (receiver). The helper sends an excitation signal to a tag through a forward link. The receiver receives a backscatter signal from the tag through a reverse link. In addition, the receiver generates RFID-related downlink signaling and sends the downlink signaling to the helper through a fronthaul link. Then, the helper forwards the signaling on the forward link.

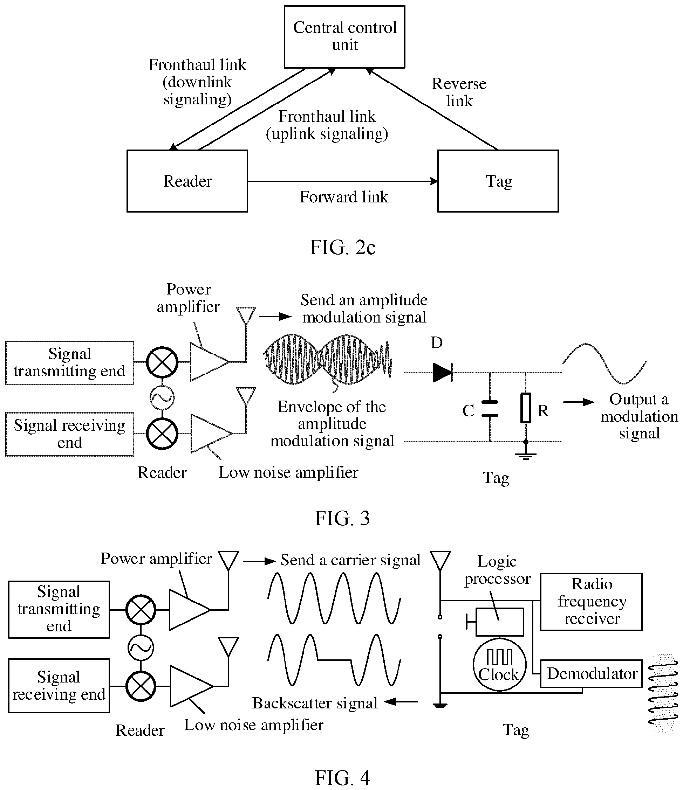

Manner 2: A centralized or integrated architecture: With reference to FIG. 2c, in addition to signal excitation and backscatter between a reader and a tag through a forward link and a reverse link, the reader further communicates with a central control unit (for example, a base station). The central control unit may perform scheduling, controlling, or the like on resources that is of the forward link and that is used by the reader and sending behavior.

In this embodiment of this application, to support the RFID in an NR system, communication between the helper and the receiver in Manner 1, and communication between the reader and the central control unit in Manner 2 may be performed by using an NR technology.

An RFID technology applied to the NR system may be referred to as, for example, a passive (Passive) IoT. A transmission mechanism of the passive IoT provided in this application is similar to a transmission mechanism of the RFID. In the passive IoT, a passive IoT device (for example, a tag) may be batter free (Batter Free). In other words, the passive IoT device is not equipped with or does not mainly rely on a battery or a wired power supply for power supply. However, that the passive IoT device does not have a power module does not mean that the passive IoT device does not need to use electricity. The passive IoT device can obtain energy from ambient light, heat, and a radio frequency, to support internet of things data sensing, wireless transmission, distributed computing, and the like. The passive IoT device may alternatively be energy storage passive or semi-passive. An energy storage passive device includes an energy storage device. A semi-passive device includes a battery. The battery supplies power for a receiving circuit, a digital circuit for protocol stack processing, and storage.

FIG. 3 is an example of a diagram of a passive IoT downlink communication method. FIG. 4 is an example of a diagram of an uplink communication method in passive IoT communication.

As shown in FIG. 3, a reader sends an amplitude modulation signal to a tag through a downlink, and the tag receives the amplitude modulation signal. An envelope detector may be used to perform envelope detection on the amplitude modulation signal, to obtain a low frequency signal in the amplitude modulation signal. Main components of the envelope detector include a diode D and a resistor-capacitance circuit (resistor-capacitance circuit, RC) shown in FIG. 3, namely, an oscillation circuit. The RC circuit includes a resistor R and a capacitor C.

The envelope detection refers to a process of demodulating a low-frequency signal from an amplitude modulation signal. In a broad sense, detection is usually referred to as demodulation, and is an inverse process of modulation, in other words, a process of extracting a modulation signal from a modulated signal. For the amplitude modulation signal, the envelope detection is a process of extracting a modulation signal from an amplitude change of the amplitude modulation signal. Envelope reflects an amplitude change curve of one high frequency signal. When amplitude modulation is performed on one high frequency signal by using one low frequency signal, the low frequency signal becomes an envelope line of the high frequency signal.

It may be understood that an envelope detection circuit shown in FIG. 3 is a diagram of a structure of a most conventional basic circuit. An evolved structure of the envelope detection circuit is not described herein. A structure of an envelope detection circuit used by the tag is not limited in this embodiment of this application.

As shown in FIG. 4, a tag cannot provide a power supply, and does not have a condition for connecting to a wired power supply to enable the tag to perform data transmission. Therefore, the tag needs to obtain energy from an external environment, and then provide the energy for the tag to perform data transmission, data processing, and other operations.

Specifically, when the tag receives a carrier signal sent by a reader, the tag may use energy obtained by an electromagnetic field generated in space, to drive a chip to send out information stored in the tag.

In the foregoing implementation method, a relationship between the reader and the tag is an "electromagnetic backscattering coupling" relationship. The "electromagnetic backscattering coupling" refers to that after an emitted electromagnetic wave contacts a measured object, the electromagnetic wave carrying information of the measured object is reflected back by using a spatial propagation law of the electromagnetic wave. This coupling is applicable to a long-distance radio frequency identification system operating at a high frequency or a microwave.

It may be understood that the uplink communication method in the passive IoT communication shown in FIG. 4 is merely an example. In some other embodiments of this application, the tag may alternatively obtain energy such as ambient light, heat, or the like, to drive the chip to send out the information stored in the tag. As described above, the tag may alternatively be an energy storage passive device or a semi-passive device.

It should be understood that a passive IoT is merely an example name, and when the passive IoT is replaced with another expression, this also falls within the protection scope of this application.

It should be further understood that an information exchange procedure and a signaling format in the foregoing passive IoT scenario are merely examples rather than limitations.

Currently, to apply the passive IoT to an OFDM system, how to generate a transmission signal between a first device (for example, a reader) and a second device (a tag), to enable the first device and the second device to perform communication and backscatter communication based on the transmission signal is an urgent problem to be resolved currently.

For ease of understanding embodiments of this application, terms used in this application are first briefly described.

1. General concept:

NR time domain is represented by a time unit $T_c = 1/(\Delta f_{max} \cdot N_f)$, where $\Delta f_{max} = 480 \cdot 10^3$ Hz, and $N_f = 4096$. For example, a time domain length of NR may be represented as an integer multiple of $T_c$.

LTE time domain is represented by a time unit $T_s = 1/(\Delta f_{ref} \cdot N_{f,ref})$, where a subcarrier spacing is $\Delta f_{ref} = 15 \cdot 10^3$ Hz, and $N_{f,ref} = 2048$. For example, a time domain length of LTE may be represented as an integer multiple of $T_s$.

A constant $\kappa = T_s/T_c = 64$.

2. Numerology (numerology): In an NR system, to adapt to OFDM waveforms with a plurality of different subcarrier spacings, a numerology is introduced, so that a subcarrier spacing is not limited, and adaptation can be performed based on different usage scenarios.

A transmission numerology supported by the NR system is shown in the following Table 1.

**Table 1**

| $\mu$ | $\Delta f = 2^{\mu} \cdot 15$ [kHz] | Cyclic prefix (cyclic prefix) |
|---|---|---|
| 0 | 15 | Normal (normal) |
| 1 | 30 | Normal |
| 2 | 60 | Normal, Extended (extended) |
| 3 | 120 | Normal |
| 4 | 240 | Normal |

$\Delta f$ is a subcarrier spacing. $\mu$ and a cyclic prefix that are specifically used are configured by the network device. In an example, for definitions of a length of a normal CP and a length of an extended CP, refer to Formula (6) in the following.

For example, when a subcarrier spacing configuration $\mu$ is 1, the subcarrier spacing $\Delta f$ is 30 kHz, and the cyclic prefix is a normal CP. For example, when a subcarrier spacing configuration $\mu$ is 2, the subcarrier spacing $\Delta f$ is 60 kHz, and the cyclic prefix is a normal CP or an extended CP. For example, it is determined through signaling configuration that the normal CP or the extended CP is used when $\mu$ is 2.

3. Frame (frame), subframe (subframe), slot, and OFDM symbol:

In an NR system, uplink transmission and downlink transmission are organized into frames in time domain. One frame is divided into 10 subframes, and the 10 subframes are numbered from #0 to #9. One frame may be further divided into two half-frames (half-frame) having same sizes, and the two half-frames are numbered #0 and #1. Each half-frame includes five subframes. For example, the half-frame #0 includes subframes #0 to #4, and the half-frame #1 includes subframes #5 to #9.

Duration of one frame may be $T_f = (\Delta f_{max} N_f / 100) = 10ms$, and duration of one subframe may be $T_{sf} = (\Delta f_{max} N_f / 1000) = 1ms$.

For a subcarrier configuration $\mu$, one subframe may include $N_{slot}^{subframe,\mu}$ slots, and one frame may include $N_{slot}^{frame,\mu}$ slots. Correspondingly, for the subcarrier spacing configuration $\mu$, slots are numbered $n_s^{\mu} \in \{0, ..., N_{slot}^{subframe,\mu} - 1\}$ in ascending order in one subframe, and slots are numbered $n_{s,f}^{\mu} \in \{0, ..., N_{slot}^{frame,\mu} - 1\}$ in ascending order in one frame. Different subcarrier spacing configurations correspond to different $N_{slot}^{subframe,\mu}$ and $N_{slot}^{frame,\mu}$ as shown in the following Table 2.

There are $N_{symb}^{slot}$ continuous OFDM symbols in one slot, and a value of $N_{symb}^{slot}$ depends on a cyclic prefix type. As shown in Table 2 and Table 3, each subcarrier configuration $\mu$ in Table 1 corresponds to a normal cyclic prefix, and a subcarrier configuration $\mu$ in Table 3 corresponds to an extended cyclic prefix. Further, for the subcarrier configuration $\mu$, one subframe includes $N_{symb}^{subframe,\mu} = N_{symb}^{slot} N_{slot}^{subframe,\mu}$ OFDM symbols. A start of a slot in one subframe is aligned in time with a start of an OFDM symbol $n_s^{\mu} N_{symb}^{slot}$ in the same subframe. For example, if slots in one subframe includes a slot #0, a slot #1, a slot #2, and the like, and each slot includes 14 OFDM symbols, a start of the slot #0 in the subframe is aligned in time with a start of an OFDM symbol #0 in the subframe, a start of the slot #1 in the subframe is aligned in time with a start of an OFDM symbol #14 in the subframe, a start of the slot #2 in the subframe is aligned in time with a start of an OFDM symbol #28 in the subframe, and the rest may be deduced by analogy.

**Table 2**

| $\mu$ | $N_{symb}^{slot}$ | $N_{slot}^{frame,\mu}$ | $N_{slot}^{subframe,\mu}$ |
|---|---|---|---|
| 0 | 14 | 10 | 1 |
| 1 | 14 | 20 | 2 |

(continued)

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 14 | 40 | 4 |
| 3 | 14 | 80 | 8 |
| 4 | 14 | 160 | 16 |

**Table 3**

| $\mu$ | $N_{\text{symb}}^{\text{slot}}$ | $N_{\text{slot}}^{\text{frame},\mu}$ | $N_{\text{slot}}^{\text{subframe},\mu}$ |
|---|---|---|---|
| 2 | 12 | 40 | 4 |

An OFDM symbol in one slot may be classified into a downlink (downlink) symbol, a flexible (flexible) symbol, or an uplink (uplink) symbol. In a slot of a downlink frame, a terminal device generally performs transmission in a downlink symbol or a flexible symbol. In a slot of an uplink frame, the terminal device generally performs transmission in an uplink symbol or a flexible symbol.

4. Antenna port: An antenna port is defined such that a channel over which a symbol on the antenna port is conveyed can be inferred from the channel over which another symbol on the same antenna port is conveyed. In other words, different signals transmitted on the same antenna port experience a same channel environment.

5. Resource grid (resource grid), or referred to as a resource grid: One resource grid corresponds to one numerology and one carrier, and the resource grid includes $N_{\text{grid},x}^{\text{size},\mu} N_{\text{sc}}^{\text{RB}}$ subcarriers and $N_{\text{symb}}^{\text{subframe},\mu}$ OFDM symbols, where $N_{\text{grid},x}^{\text{size},\mu}$ represents a quantity of resource blocks (resource element, RB) in one resource grid when a subcarrier spacing configuration is $\mu$. $N_{\text{sc}}^{\text{RB}}$ represents a quantity of subcarriers in one RB. Optionally, $N_{\text{sc}}^{\text{RB}}=12$ continuous subcarriers.

It should be understood that there are a group of resource grids in each transmission direction (an uplink or a downlink). For a given antenna port p, subcarrier spacing configuration $\mu$, and transmission direction (a downlink or an uplink), there is one resource grid.

A start resource block of the resource grid is a common resource block (common resource block, CRB).

6. Resource element (resource element, RE): Each element in a resource grid for an antenna port p and a subcarrier spacing configuration $\mu$ is referred to as a resource element, and is uniquely identified by $(k,l)_{p,\mu}$, where $k$ is an index of the RE in frequency domain, and $l$ is a position of a symbol of the RE relative to a reference point in time domain. The resource element $(k,l)_{p,\mu}$ corresponds to one physical resource and a complex number value $a_{k,l}^{(p,\mu)}$. When there is no risk for confusion, or no particular antenna port or subcarrier spacing is specified, indices p and $\mu$ may be dropped, and $a_{k,l}^{(p,\mu)}$ may be represented as $a_{k,l}^{(p)}$ or $a_{k,l}$.

7. Resource block (resource block, RB): A resource block is defined as $N_{\text{sc}}^{\text{RB}} = 12$ continuous subcarriers in frequency domain. In embodiments of this application, a frequency of each subcarrier may be a center frequency of the subcarrier.

8. Point A: A point A is a common reference point of a resource grid.

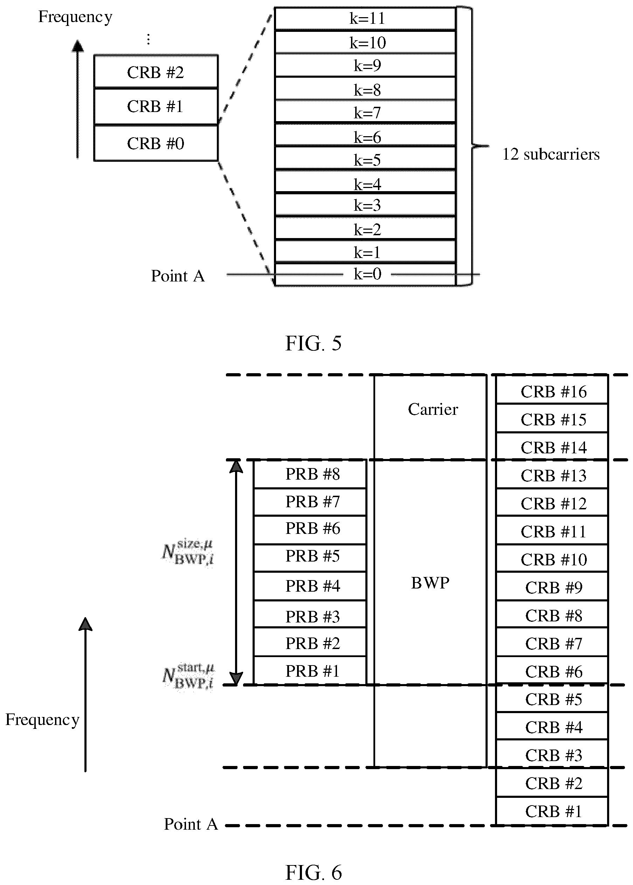

9. Common resource block (common resource block): For a subcarrier spacing configuration $\mu$, common resource blocks are numbered from 0 and upward in frequency domain. Refer to FIG. 5. A center frequency of a subcarrier 0 of a common resource block 0 for the subcarrier spacing configuration $\mu$ coincides with a point A.

A number (number) $n_{\text{CRB}}^{\mu}$ of a common resource block in frequency domain and a resource element *(k, l)* for the subcarrier spacing configuration $\mu$ meet the following Formula (1):

$$n_{\mathrm{CRB}}^{\mu} = \left\lfloor \frac{k}{N_{\mathrm{sc}}^{\mathrm{RB}}} \right\rfloor \quad (1)$$

$k$ is defined relative to the point A; when $k = 0$, a RE corresponds to a subcarrier of which a center is the point A; and $\lfloor x \rfloor$ represents that x is rounded down.

10. Physical resource block (physical resource block): Physical resource blocks for a subcarrier spacing configuration $\mu$ are defined to be in a bandwidth part (bandwidth part, BWP), and are numbered from 0 to $N_{\mathrm{BWP},i}^{\mathrm{size},\mu} - 1$, where i is a number of the BWP. A physical resource block $n_{\mathrm{PRB}}^{\mu}$ and a common resource block $n_{\mathrm{CRB}}^{\mu}$ in the BWP i meet the following Formula (2):

$$n_{\mathrm{CRB}}^{\mu} = n_{\mathrm{PRB}}^{\mu} + N_{\mathrm{BWP},i}^{\mathrm{start},\mu} \quad (2)$$

$N_{\mathrm{BWP},i}^{\mathrm{start},\mu}$ is a common resource block starting from a common resource block 0 in the BWP. In other words, $N_{\mathrm{BWP},i}^{\mathrm{start},\mu}$ is a start position of the BWP. When there is no risk of confusion, an index $\mu$ may be deleted.

11. BWP: For a given numerology $\mu_i$ in a BWP i on a given (given) carrier (carrier), the BWP is a subset of continuous CRBs. A start position $N_{\mathrm{BWP},i}^{\mathrm{start},\mu}$ of the BWP and a quantity $N_{\mathrm{BWP},i}^{\mathrm{size},\mu}$ of physical resource blocks PRBs should respectively meet $N_{\mathrm{grid},x}^{\mathrm{start},\mu} \leq N_{\mathrm{BWP},i}^{\mathrm{start},\mu} < N_{\mathrm{grid},x}^{\mathrm{start},\mu} + N_{\mathrm{grid},x}^{\mathrm{size},\mu}$ and $N_{\mathrm{grid},x}^{\mathrm{start},\mu} < N_{\mathrm{BWP},i}^{\mathrm{start},\mu} + N_{\mathrm{BWP},i}^{\mathrm{size},\mu} \leq N_{\mathrm{grid},x}^{\mathrm{start},\mu} + N_{\mathrm{grid},x}^{\mathrm{size},\mu}$, where $N_{\mathrm{grid},x}^{\mathrm{size},\mu}$ represents a size of a resource grid, and $N_{\mathrm{grid},x}^{\mathrm{start},\mu}$ represents a start position of the resource grid. A frequency domain position relationship between the BWP and the carrier may be shown in FIG. 6.

Generally, one terminal device may be configured with up to four BWPs in a downlink with a single downlink BWP being active at a given time; and one terminal device may be configured with up to four BWPs in an uplink with a single uplink BWP being active at a given time.

For ease of understanding of embodiments of this application, the following several descriptions are provided.

First, "first", "second", "third" and various numbers in embodiments shown in the following are merely used for differentiation for ease of description, and are not intended to limit the scope of embodiments of this application. For example, different OFDM time domains, time domain resources, sequences, downlink frequency domain units, values, time domain lengths, and devices are distinguished.

Second, "pre-defining" may be implemented by pre-storing corresponding code, a table, or another manner that may be used to indicate related information in a device (for example, including a first device and a second device). A specific implementation is not limited in this application.

"Pre-configuration" may be implemented by pre-storing corresponding code, a table, or another manner that may be used to indicate related information in a device (for example, including a first device and a first device), or may be implemented through signaling pre-configuration. For example, a network device is implemented through signaling pre-configuration or in another manner. A specific implementation is not limited in this application.

Third, a "protocol" in embodiments of this application may be a standard protocol in the communication field, for example, may include an LTE protocol, an NR protocol, and a related protocol applied to a future communication system. This is not limited in this application.

Fourth, "at least one" means one or more, and "a plurality of" means two or more. The term "and/or" describes an association relationship between associated objects, and represents that three relationships may exist. For example, A and/or B may represent the following cases: Only A exists, both A and B exist, and only B exists, where A and B may be singular or plural.

Fifth, in embodiments of this application, descriptions such as "when", "in a case", "if", and "if" mean that a device (for example, a first device or a second device) performs corresponding processing in an objective situation, and are not intended to limit time, and the device (for example, the first device or the second device) is not required to perform a determining action during implementation, and do not mean any other limitation.

Sixth, operation symbols used in embodiments of this application include: ⌊ ⌋ represents rounding down, ⌈ ⌉ represents rounding up, and mod represents a modulo operation.

The following describes in detail a communication method in embodiments of this application with reference to the accompanying drawings.

It should be understood that, only for ease of understanding and description, the following describes in detail the method provided in embodiments of this application by using interaction between the first device and the second device as an example.

The first device may be, for example, the foregoing reader, a terminal device deployed with a reader, or a network device deployed with a reader; and the second device may be, for example, the foregoing tag, or a terminal device deployed with a tag. When the first device is the terminal device deployed with the reader, and the second device is the terminal device deployed with the tag, the first device may be the terminal device 124 in FIG. 1, and the second device may be the terminal device 125 or 126 in FIG. 1. When the first device is the network device deployed with the reader, and the second device is the terminal device deployed with the tag, the first device may be the network device 111 in FIG. 1, and the second device may be any one of the terminal devices 121 to 123 in FIG. 1; or the first device may be the network device 112 in FIG. 1, and the second device may be the terminal device 127 or 128 in FIG. 1.

However, it should be understood that this shall not constitute any limitation on an execution body of the method provided in this application. Provided that a program that records code of the method provided in embodiments of this application can be run to perform the method provided in embodiments of this application, any device could be used as the execution body of the method provided in embodiments of this application. For example, the first device shown in the following embodiments may alternatively be replaced with a part in the first device, for example, a chip, a chip system, or another function module that can invoke a program and execute the program. Alternatively, the second device may be replaced with a part in the second device, for example, a chip, a chip system, another function module that can invoke a program and execute the program, or the like.

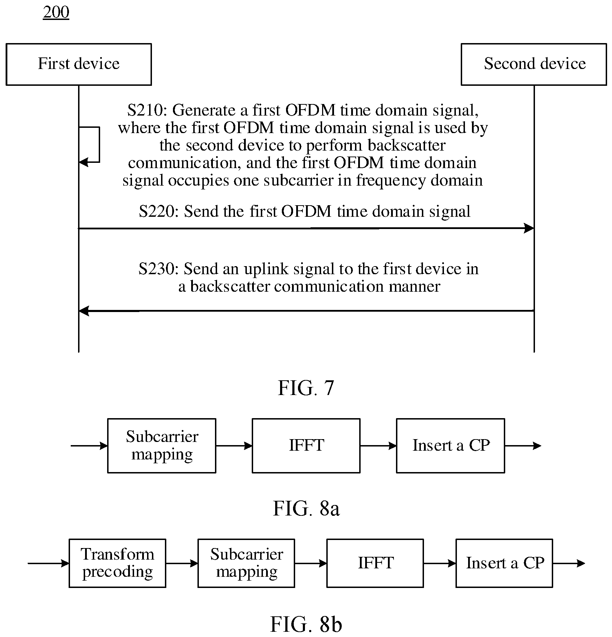

FIG. 7 is a schematic interaction flowchart of a communication method 200 according to an embodiment of this application. As shown in FIG. 7, the method 200 may include some or all of S210 to S230. The following describes each step in the method 200 in detail.

S210: A first device generates a first OFDM time domain signal. The first OFDM time domain signal is used by a second device to perform backscatter communication, and the first OFDM time domain signal occupies one subcarrier in frequency domain.

S220: The first device sends the first OFDM time domain signal to the second device. Correspondingly, the second device receives the first OFDM time domain signal sent by the first device.

S230: The second device sends an uplink signal to the first device in a backscatter communication manner. Correspondingly, the first device receives the uplink signal sent by the second device.

A radio frequency carrier of the uplink signal is determined based on a radio frequency carrier of the first OFDM time domain signal. For example, the radio frequency carrier of the uplink signal may be the same as the radio frequency carrier of the first OFDM time domain signal, or an offset value exists between the radio frequency carrier of the uplink signal and the radio frequency carrier of the first OFDM time domain signal. For example, in an implementation, the second device uses the radio frequency carrier of the first OFDM time domain signal as a carrier, and adjusts a backscatter factor to transfer information. When the backscatter factor includes frequency information, a frequency shift operation may be implemented. In other words, an offset value exists between the radio frequency carrier of the uplink signal and the radio frequency carrier of the first OFDM time domain signal. When the backscatter factor does not include frequency information, the radio frequency carrier of the uplink signal may be the same as the radio frequency carrier of the first OFDM time domain signal.

It may be understood that the first OFDM time domain signal occupies one subcarrier in frequency domain, and the subcarrier may be located in a first frequency domain resource. Optionally, the first frequency domain resource may be deployed in transmission bandwidth (for example, a BWP or a downlink carrier) of an NR system, and the first frequency domain resource may be deployed in a guard band or a non-guard band of the NR transmission bandwidth. Alternatively, the first frequency domain resource may be deployed in an independent frequency domain resource. For example, one or more GSM carriers in a radio access network (GSM EDGE radio access network, GERAN) system are deployed as the first frequency domain resource, or a potential spectrum for internet of things deployment is used as the first frequency domain resource. The first frequency domain resource may be, for example, transmission bandwidth of a passive IoT, and the first device and the second device may perform communication and backscatter communication in the first frequency domain resource. For example, the first frequency domain resource is the transmission bandwidth of the passive IoT, occupies one RB, and includes 12 subcarriers. The first OFDM time domain signal occupies a 6th subcarrier in the 12 subcarriers in frequency domain. In other words, the first OFDM time domain signal maps or carries a to-be-transmitted element on the 6th subcarrier. The first OFDM time domain signal does not map or carry a to-be-transmitted element on a 1st subcarrier to a 5th subcarrier and a 7th subcarrier to an 11th subcarrier of the RB. In other words, elements mapped or carried by the first OFDM time domain signal on the 1st subcarrier to the 5th subcarrier and the 7th subcarrier to the 11th subcarrier of the RB are 0.

It should be further understood that the first OFDM time domain signal may occupy one RE in time frequency space. As described above, each element in a resource grid for an antenna port p and a subcarrier spacing configuration μ may be uniquely identified by $(k,l)_{p,\mu}$, where k is an index of the RE in frequency domain (that is, an index of the foregoing one subcarrier), and l is a position of a symbol of the RE relative to a reference point in time domain. The reference point is predefined. The resource element $(k,l)_{p,\mu}$ corresponds to one physical resource and a complex number value $a_{k,l}^{(p,\mu)}$.

As described above, the first OFDM time domain signal may be used to generate a carrier signal. For example, the first device may perform up-conversion on the first OFDM time domain signal to obtain the carrier signal, and send the carrier signal to the second device. It may be simply understood as that the first OFDM time domain signal corresponds to a to-be-transmitted carrier signal.

In an example of S210, the first device may map an element to the foregoing one subcarrier, to generate the first OFDM time domain signal occupying the subcarrier. The element may be a non-zero value A, and A may be a real number or a complex number. For example, A may be 1, or A may be the foregoing complex number value $a_{k,l}^{(p,\mu)}$.

In S210, an OFDM waveform is used for the first OFDM time domain signal used by the second device to perform backscatter communication, and is consistent with an NR waveform, so that coexistence with NR can be ensured. In addition, the first OFDM time domain signal occupies one subcarrier in frequency domain. In this case, the first device may concentrate power on the subcarrier. When the second device subsequently performs backscatter communication based on the first OFDM time domain signal, reliability of backscatter data can be improved. When receiving uplink data transmitted by the second device in a backscatter communication manner, the first device needs to cancel, through interference suppression, interference of a carrier signal leaked by the first device and/or a carrier signal backscattered by an environment, to correctly demodulate the uplink data. The first OFDM time domain signal occupies one subcarrier in frequency domain, so that implementation complexity of the interference suppression of the first device can be reduced.

In S210, the first OFDM time domain signal may be generated with reference to a generation manner of a baseband signal in the NR system. For example, in the NR system, both a waveform of a downlink signal and a waveform of an uplink signal are conventional (conventional) OFDM using cyclic prefixes (cyclic prefixes, CPs). FIG. 8a is a diagram of an OFDM transmission link according to this application. As shown in FIG. 8a, downlink signal transmission is described by using an example. A transmitting end device may map a symbol of a downlink signal to a plurality of subcarriers, perform inverse fast Fourier transform (inverse fast Fourier transform, IFFT) on a mapped sequence, to obtain a time domain signal of the downlink signal, and insert a CP into the time domain signal of the downlink signal, to obtain an OFDM time domain signal of the downlink signal. FIG. 8b is a diagram of a discrete Fourier transform-spread-orthogonal frequency division multiplexing (Discrete Fourier Transform-Spread-OFDM, DFT-S-OFDM) transmission link according to this application. Refer to FIG. 8b. A transmitting end device may perform transform precoding on a symbol of a downlink signal, map a sequence obtained by performing the transform precoding to a plurality of subcarriers, perform IFFT on a mapped sequence, to obtain a time domain signal of the downlink signal, and insert a CP into the time domain signal of the downlink signal, to obtain an OFDM time domain signal of the downlink signal.

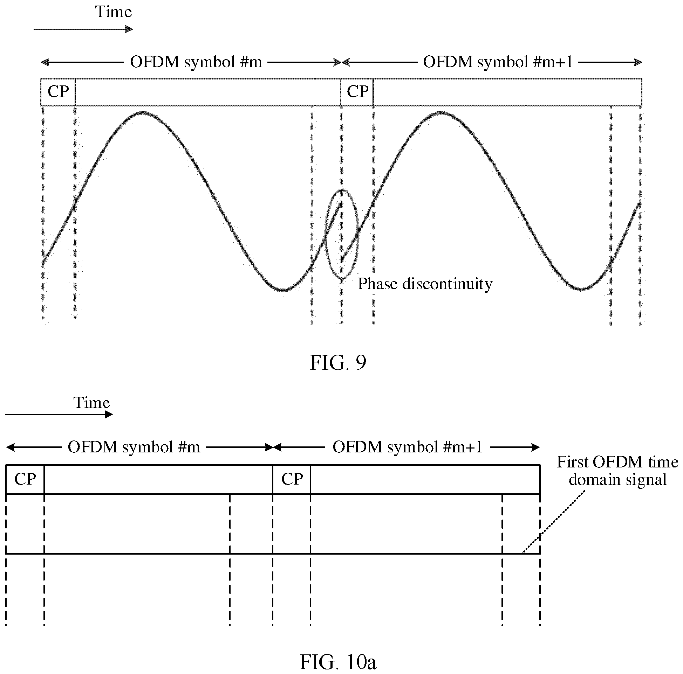

In S210, if the first device generates the first OFDM time domain signal in the foregoing manner, phases of the first OFDM time domain signal are continuous before the CP is inserted. Insertion of the CP causes phase discontinuity of adjacent OFDM symbols in the first OFDM time domain signal after the CP is inserted. As shown in FIG. 9, after a CP is inserted, an OFDM symbol m and an OFDM symbol m+1 of a first OFDM time domain signal are discontinuous in phase. However, as described above, the first device needs to cancel the interference of the leaked carrier signal and/or the carrier signal backscattered by the environment, to correctly demodulate the uplink signal, Phase discontinuity of an OFDM time domain signal (for example, the first OFDM time domain signal) of a carrier signal increases complexity of interference suppression.

Based on this, in some embodiments of this application, the first OFDM time domain signal is an OFDM time domain signal with continuous phases, to reduce the complexity of performing the interference suppression by the first device. With reference to FIG. 10a to FIG. 10c, the following respectively describes three possible implementations provided in embodiments of this application.

Manner 1: A frequency of the foregoing one subcarrier is zero, and phases of a first OFDM time domain signal are continuous.

When the frequency of the foregoing one subcarrier is zero, the first OFDM time domain signal is a direct current signal shown in FIG. 10a. In this case, inserting a CP does not cause phase discontinuity of the first OFDM time domain signal. For example, the first OFDM time domain signal includes a first OFDM symbol and a second OFDM symbol adjacent to the first OFDM symbol, for example, an OFDM symbol #m and an OFDM symbol #m+1 in FIG. 10a. The first OFDM symbol and the second OFDM symbol are continuous in phase.

It should be understood that the subcarrier whose frequency is 0 may also be referred to as a direct current (direct current, DC) subcarrier.

It should be understood that the frequency of the subcarrier may be a center frequency of the subcarrier.

A first device may map an element A to the subcarrier whose frequency is 0 through subcarrier mapping, to generate the direct current first OFDM time domain signal. Optionally, before the subcarrier mapping, the first device may start transform precoding, or perform DFT extension. Certainly, before the subcarrier mapping, the first device may not need to perform transform precoding, or may not perform DFT extension.

For example, when the first device starts the transform precoding, the first device may perform the transform precoding on a first sequence, to obtain a second sequence. One element (for example, the foregoing element A) in the second sequence is non-zero, and an element other than the element in the second sequence is zero. Further, the first device maps the non-zero element in the second sequence to the foregoing one subcarrier (for example, the subcarrier whose frequency is 0).

Manner 2: A first OFDM time domain signal does not include a cyclic prefix, and phases of the first OFDM time domain signal are continuous.

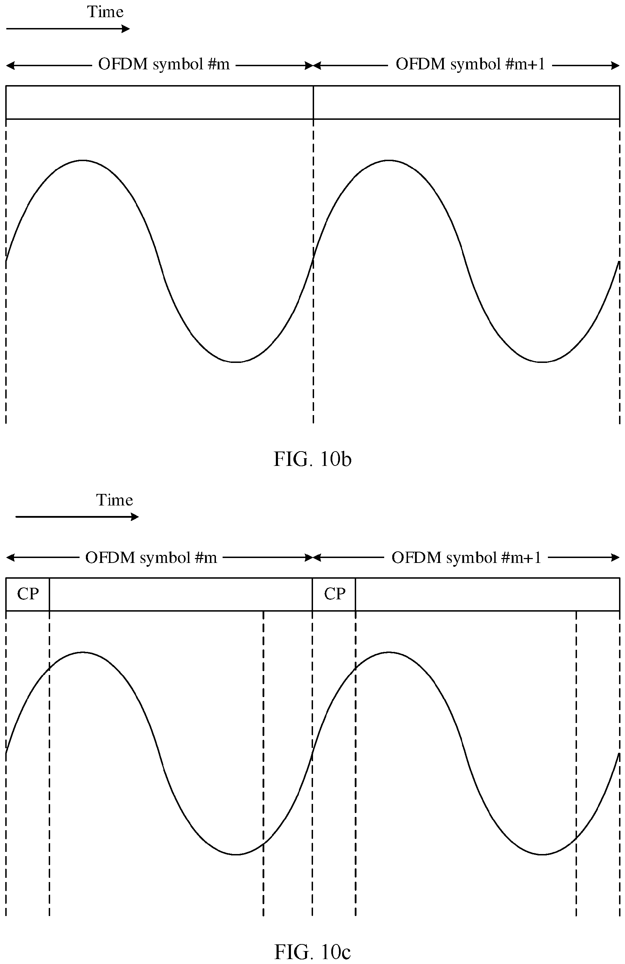

For example, in a process of generating the first OFDM time domain signal, a first device does not insert a CP after performing IFFT. As described above, the phases of the first OFDM time domain signal into which the CP is not inserted are continuous. For example, the first OFDM time domain signal includes a first OFDM symbol and a second OFDM symbol adjacent to the first OFDM symbol, for example, an OFDM symbol #m and an OFDM symbol #m+1 in FIG. 10b. The first OFDM symbol and the second OFDM symbol are continuous in phase when the CP is not inserted.

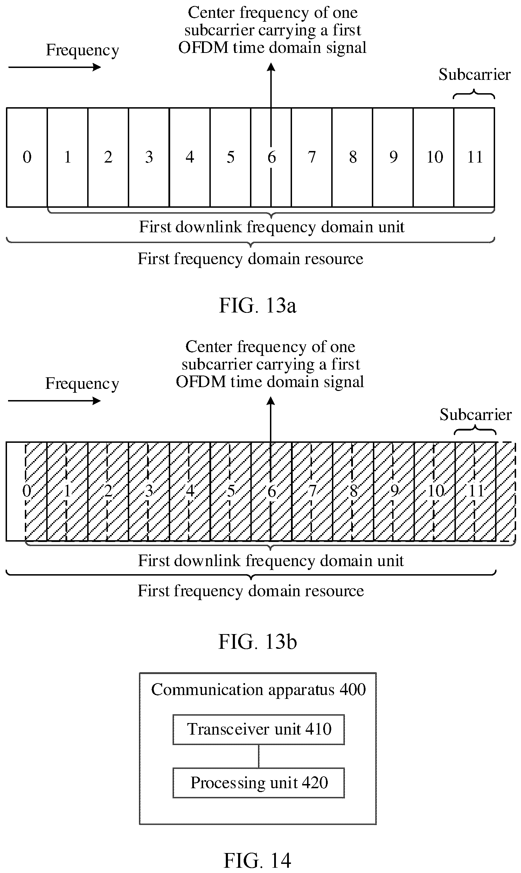

The first device may map an element A to any subcarrier (for example, a subcarrier whose index is k, where k is an integer greater than or equal to 0) in a first downlink frequency domain unit through subcarrier mapping, to generate the first OFDM time domain signal with continuous phases. In addition, a subcarrier occupied by the first OFDM time domain signal in frequency domain is a subcarrier (for example, the subcarrier whose index is k) during the subcarrier mapping. The first downlink frequency domain unit may be the foregoing first frequency domain resource, or the first downlink frequency domain unit may be obtained by performing frequency offset based on the first frequency domain resource. For example, the first downlink frequency domain unit described below with reference to FIG. 13b includes each subcarrier on which frequency offset is performed in the first frequency domain resource based on a preset value.

Optionally, before the subcarrier mapping, the first device may start transform precoding, or perform DFT extension. Certainly, before the subcarrier mapping, the first device may not need to perform transform precoding, or may not perform DFT extension.

For example, when the first device starts the transform precoding, the first device may perform the transform precoding on a first sequence, to obtain a second sequence. One element (for example, the foregoing element A) in the second sequence is non-zero, and an element other than the element in the second sequence is zero. Further, the first device maps the non-zero element in the second sequence to the foregoing one subcarrier (for example, the subcarrier whose index is k).

Manner 3: A first OFDM time domain signal includes a cyclic prefix, and phases of the first OFDM time domain signal are continuous.

In comparison with Manner 1 and Manner 2, the first OFDM time domain signal includes the cyclic prefix in Manner 3. In this case, a passive IoT can be better compatible with an OFDM system into which a CP needs to be inserted, so that the passive IoT can be better applicable to various OFDM systems. However, as described above, in the process of generating the first OFDM time domain signal, the first device inserts the CP after performing IFFT. This cause phase discontinuity of the first OFDM time domain signal.

In this case, in Manner 3, the first device may perform phase compensation on the first OFDM time domain signal to enable the phases of the first OFDM time domain signal to be continuous. For example, the first OFDM time domain signal includes a first OFDM symbol and a second OFDM symbol adjacent to the first OFDM symbol, for example, an OFDM symbol #m and an OFDM symbol #m+1 in FIG. 10c. The first OFDM symbol and the second OFDM symbol are continuous in phase when the CP is inserted.

The first device may map an element A to any subcarrier (for example, a subcarrier whose index is k, where k is an integer greater than or equal to 0) in a first downlink frequency domain unit through subcarrier mapping, to generate the first OFDM time domain signal. In addition, a subcarrier occupied by the first OFDM time domain signal in frequency domain is a subcarrier (for example, the subcarrier whose index is k) during the subcarrier mapping. It should be noted that, in a process of generating the first OFDM time domain signal, the phase compensation needs to be performed on the first OFDM time domain signal, to generate the first OFDM time domain signal with continuous phases.

Optionally, before the subcarrier mapping, the first device may start transform precoding, or perform DFT extension. Certainly, before the subcarrier mapping, the first device may not need to perform transform precoding, or may not perform DFT extension.

In Manner 3, when the first device starts the transform precoding, the first device also needs to perform the transform precoding on a first sequence. An implementation process and a subcarrier mapping process after the transform precoding are the same as those in Manner 2. Details are not described herein again.

It should be understood that two OFDM symbols are used as an example for description in FIG. 10a to FIG. 10c, but this does not constitute any limitation on this application. For example, the first OFDM time domain signal may include more OFDM symbols, and two adjacent OFDM symbols are continuous in phase.

In some embodiments, in the first downlink frequency domain unit, an element carried on each subcarrier other than the subcarrier is zero. For example, if the first device starts the transform precoding, the first device may perform the transform precoding on the first sequence, to obtain the second sequence. One element (for example, the foregoing element A) in the second sequence is non-zero, and an element other than the element in the second sequence is zero. Further, the first device maps the non-zero element in the second sequence to the foregoing one subcarrier (for example, the subcarrier whose index is k), and maps other zero elements in the second sequence to each subcarrier other than the subcarrier. The first downlink frequency domain unit may be the foregoing first frequency domain resource, or the first downlink frequency domain unit may be obtained by performing the frequency offset based on the first frequency domain resource

(which is described in detail in the following)

The following uses an example to describe how the first device performs the phase compensation on the first OFDM time domain signal to enable the phases of the first OFDM time domain signal to be continuous in Manner 3.

An example in which the first OFDM time domain signal includes the first OFDM symbol and the second OFDM symbol is still used. A time domain start position of the second OFDM symbol is determined based on a time domain start position of the first OFDM symbol, an index of the second OFDM symbol in a first time domain resource, and duration of the first OFDM symbol. The index of the second OFDM symbol in the first time domain resource is an integer greater than or equal to 0.

For example, a time domain start position $t^{\mu}_{\text{start},l}$ of a second OFDM symbol that is on an antenna port p and whose subcarrier spacing configuration is $\mu$ may meet the following Formula (3):

$$t^{\mu}_{\text{start},l} = \begin{cases} 0 & l = 0 \\ t^{\mu}_{\text{start},l-1} + \left(N^{\mu}_{u} + N^{\mu}_{\text{CP},l-1}\right) \cdot T_c & \text{otherwise} \end{cases} \quad (3)$$

$l$ is the index of the second OFDM symbol in the first time domain resource, $t^{\mu}_{\text{start},l-1}$ is the time domain start position of the first OFDM symbol, $N^{\mu}_{\text{CP},l-1}$ is a length of the CP, $N^{\mu}_{u} = 2048\kappa \cdot 2^{-\mu}$, a constant $\kappa = T_s/T_c = 64$, and $\left(N^{\mu}_{u} + N^{\mu}_{\text{CP},l-1}\right) \cdot T_c$ is the duration of the first OFDM symbol.

For example, it is assumed that the first time domain resource includes M1 OFDM symbols, the first OFDM symbol may be any one of OFDM symbols whose indices are 0 to M1-2 in the first time domain resource, and the second OFDM symbol may be an OFDM symbol adjacent to the first OFDM symbol in the first time domain resource. For example, the first OFDM symbol is an OFDM symbol #0, and in this case, the second OFDM symbol is an OFDM symbol #1. With reference to the foregoing Formula (3), when the first OFDM symbol is the OFDM symbol #0 (in other words, an OFDM symbol whose index is 0), the time domain start position of the first OFDM symbol is $t^{\mu}_{\text{start},0} = 0$. In this case, the second OFDM symbol is the OFDM symbol #1, and the time domain start position of the second OFDM symbol is $t^{\mu}_{\text{start},1} = t^{\mu}_{\text{start},0} + \left(N^{\mu}_{u} + N^{\mu}_{\text{CP},0}\right) \cdot T_c = 0 + \left(N^{\mu}_{u} + N^{\mu}_{\text{CP},0}\right) \cdot T_c$. To be specific, there is an interval of the duration of the first OFDM symbol between the time domain start position of the second OFDM symbol and the time domain start position of the first OFDM symbol. In other words, the first OFDM symbol and the second OFDM symbol are connected in a head-to-tail manner in time domain. When the first time domain resource includes a plurality of OFDM symbols, it may be determined, with reference to the foregoing Formula (3), that a difference between each OFDM symbol and one OFDM symbol that follows the OFDM symbol in time domain is duration of the OFDM symbol. In other words, every two adjacent OFDM symbols in the first time domain resource are connected in a head-to-tail manner.

It should be further noted that an index of the first OFDM symbol in the first time domain resource may be an integer greater than or equal to 0. Optionally, when the index of the first OFDM symbol in the first time domain resource is 0, the time domain start position of the first OFDM symbol is 0. The index of the second OFDM symbol is the index of the first OFDM symbol plus 1.

It can be learned, according to the foregoing Formula (3), that when the index of the second OFDM symbol is not 0, the time domain start position of the second OFDM symbol is a sum of the time domain start position of the first OFDM symbol and the duration of the first OFDM symbol.

On the basis of the foregoing Formula (3), in the process of generating the first OFDM time domain signal, the first device may perform the phase compensation with reference to the following Formula (4), to obtain the first OFDM time domain signal $s_l^{(p,\mu)}(t)$ with continuous phases.

$$s_l^{(p,\mu)}(t) = \sum_{k=0}^{N_{\text{grid}}^{\text{size},\mu} N_{\text{sc}}^{\text{RB}}-1} a_{k,l}^{(p,\mu)} \cdot e^{j2\pi\left(k+k_0^\mu-N_{\text{grid}}^{\text{size},\mu} N_{\text{sc}}^{\text{RB}}/2\right)\Delta f\left(t-N_{\text{CP},l}^\mu T_c-t_{\text{start},l}^\mu\right)} \quad (4)$$

$a_{k,l}^{(p,\mu)}$ is the foregoing element A; $N_{\text{grid}}^{\text{size},\mu}$ is a size (or bandwidth) of a resource grid in a unit of an RB; $N_{\text{sc}}^{\text{RB}}$ is a quantity of subcarriers in one resource block; k is an index of the foregoing one subcarrier, and $k_0^\mu$ is an offset value; and $\Delta f$ is a subcarrier spacing, t is time in one subframe, and t meets $t_{\text{start},l}^\mu \leq t < t_{\text{start},l}^\mu + \left(N_u^\mu + N_{\text{CP},l}^\mu\right)T_c$.

As described above, according to the foregoing Formula (3), OFDM symbols in the first time domain resource are connected in the head-to-tail manner in time domain, and $s_l^{(p,\mu)}(t)$ obtained according to the foregoing Formula (4) is continuous. Therefore, the phases of the first OFDM time domain signal that is obtained with reference to the foregoing Formula (3) and Formula (4) are continuous in the first time domain resource.

The foregoing $k_0^\mu$ may meet the following Formula (5), and the foregoing $N_{\text{CP},l}^\mu$ may meet the following Formula (6).

$$k_0^\mu = \left(N_{\text{grid}}^{\text{size},\mu} + N_{\text{grid}}^{\text{size},\mu}/2\right) N_{\text{sc}}^{\text{RB}} - \left(N_{\text{grid}}^{\text{size},\mu_0} + N_{\text{grid}}^{\text{size},\mu_0}/2\right) N_{\text{sc}}^{\text{RB}} 2^{\mu_0-\mu} \quad (5)$$

$N_{\text{grid}}^{\text{size},\mu_0}$ is a size (or bandwidth) of a resource grid for a subcarrier spacing configuration $\mu_0$, and $\mu_0$ is a maximum $\mu$ value configured in the subcarrier spacing configuration. For example, $\mu$ is configured to be equal to 0, 1, or 3 in one resource grid, where $\mu_0 = 3$.

$$N_{\text{CP},l}^\mu = \begin{cases} 512\kappa \cdot 2^{-\mu} & \text{extended CP} \\ 144\kappa \cdot 2^{-\mu} + 16\kappa & \text{normal CP}, l = 0 \text{ or } l = 7 \cdot 2^\mu \\ 144\kappa \cdot 2^{-\mu} & \text{normal CP}, l \neq 0 \text{ or } l \neq 7 \cdot 2^\mu \end{cases} \quad (6)$$

In some embodiments, the first time domain resource may be a time domain resource used to transmit the first OFDM time domain signal. In this case, each OFDM symbol in the first time domain resource has a corresponding index *l*. It is assumed that the first time domain resource includes N OFDM symbols. In this case, an index *l* of a 1st OFDM symbol in the N OFDM symbols is 0, and indices of the remaining OFDM symbols sequentially increase until N-1 is reached. For an OFDM symbol *l* C {0,1,... N- 1} that is on an antenna port p and whose subcarrier spacing configuration is $\mu$, the first OFDM time domain signal $s_l^{(p,\mu)}(t)$ may be generated according to the foregoing Formula (4).

In some other embodiments, that the first time domain resource may be at least one subframe may alternatively be represented as that the first time domain resource may be a resource whose time domain length is 1 ms or a resource whose time domain length is an integer multiple of 1 ms. An example in which the first time domain resource is one subframe is used. Each OFDM symbol in the subframe has a corresponding index *l*, and an index *l* of a 1st OFDM symbol in the subframe is 0, and indices of the remaining OFDM symbols sequentially increase until $N_{\text{slot}}^{\text{subframe},\mu} N_{\text{symb}}^{\text{slot}}-1$

1 is reached. For an OFDM symbol $l \in \left\{ 0, 1, \ldots N_{\text{slot}}^{\text{subframe},\mu} N_{\text{symb}}^{\text{slot}} - 1 \right\}$ that is on an antenna port p and whose subcarrier spacing configuration is $\mu$, the first OFDM time domain signal $s_l^{(p,\mu)}(t)$ may be generated according to the foregoing Formula (4).

In the foregoing, symbol-by-symbol phase compensation is performed on the first OFDM time domain signal based on the index of the OFDM symbol in the at least one subframe. This facilitates the compatibility between the passive IoT and the OFDM system. However, symbol-by-symbol phase compensation is performed on the first OFDM time domain signal based on an index of an OFDM symbol in the time domain resource used to transmit the first OFDM time domain signal. When the index of the OFDM symbol is 0, an initial phase (that is, an initial phase) of the first OFDM time domain signal is 0, and the initial phase of the first OFDM time domain signal does not need to be determined, so that operation complexity of the phase compensation is reduced. The initial phase of the first OFDM time domain signal is a phase of a 1st OFDM symbol at a start moment in the first OFDM time domain signal. An initial phase of an OFDM symbol is a phase of the OFDM symbol at a start moment. For example, if an OFDM symbol is a sine signal, represented as sin($2\pi \times$f$\times$t), and a start moment is t=0, an initial phase is 0. f is a frequency of the sine signal.

It should be noted that in Manner 1, the first device may also generate the first OFDM time domain signal $s_l^{(p,\mu)}(t)$ according to the foregoing Formula (3) to Formula (6). A difference between Manner 1 and Manner 3 lies in that, in Manner 1, k meets $k = N_{\text{grid}}^{\text{size},\mu} N_{\text{sc}}^{\text{RB}} / 2 - k_0^{\mu}$, and a value of $k + k_0^{\mu} - N_{\text{grid}}^{\text{size},\mu} N_{\text{sc}}^{\text{RB}} / 2$ is 0, that is,

$$s_l^{(p,\mu)}(t) = \sum_{k=0}^{N_{\text{grid}}^{\text{size},\mu} N_{\text{sc}}^{\text{RB}} - 1} a_{k,l}^{(p,\mu)} .$$

In Manner 2, the first device may also generate the first OFDM time domain signal $s_l^{(p,\mu)}(t)$ according to the foregoing Formula (3) to Formula (6). A difference between Manner 2 and Manner 3 lies in that the CP is not inserted in Manner 2, and therefore, time $N_{\text{CP},l}^{\mu} T_c$ occupied by the CP is 0, that is, $s_l^{(p,\mu)}(t) = \sum_{k=0}^{N_{\text{grid}}^{\text{size},\mu} N_{\text{sc}}^{\text{RB}} - 1} a_{k,l}^{(p,\mu)}$.

$$e^{j2\pi\left(k+k_0^{\mu} - N_{\text{grid}}^{\text{size},\mu} N_{\text{sc}}^{\text{RB}} / 2\right)\Delta f\left(t - t_{\text{start},l}^{\mu}\right)} .$$

The one subcarrier occupied by the first OFDM time domain signal is located in the first downlink frequency domain unit. For example, an absolute value of a difference between a quantity of subcarriers whose frequencies are lower than the frequency of the subcarrier and a quantity of subcarriers whose frequencies are higher than the frequency of the subcarrier in the first downlink frequency domain unit is 0 or 1. In other words, the first downlink frequency domain unit includes a plurality of subcarriers, and the one subcarrier may be a subcarrier close to a center frequency position in the plurality of subcarriers.

As described above, the first device may map the element A to the subcarrier whose index is k. The index k of the subcarrier may be one of indices of the subcarriers in the first downlink frequency domain unit. For example, the first downlink frequency domain unit includes 24 subcarriers (a subcarrier #0, a subcarrier #1, ..., and a subcarrier #23). In this case, the index of the subcarrier may be 12. Alternatively, the index k of the subcarrier may be one of indices of subcarriers in one resource block in the first downlink frequency domain unit. For example, the first downlink frequency domain unit includes 3 RBs (for example, an RB #0, an RB #1, and an RB #2), an RB in which the subcarrier is located may be the RB #1, the RB #1 includes 12 subcarriers (for example, a subcarrier #0 to a subcarrier #11), and the index k of the subcarrier may be 6.

Optionally, the index of the subcarrier may start from 0. A larger index of the subcarrier indicates a higher corresponding frequency of the subcarrier. For example, if indices of the subcarriers are sequentially 0 to 11, frequencies of the subcarrier #0 to the subcarrier #11 increase sequentially.

The first downlink frequency domain unit may include a plurality of RBs, and each RB may include, for example, 12 subcarriers. The index k of the foregoing one subcarrier may be a first value. In some embodiments, the first value is equal to half of a quantity of subcarriers in the first downlink frequency domain unit. For example, the index of the subcarrier is $k = N_{\text{RB}} N_{\text{sc}}^{\text{RB}} / 2$, where $N_{\text{RB}}$ is a quantity of RBs included in the first downlink frequency domain unit.

For example, the first downlink frequency domain unit includes 11 RBs (indices of the RBs are sequentially #0, #1, ..., and ^#10), and each RB includes 12 subcarriers. In other words, the first downlink frequency domain unit includes 132 subcarriers (indices of the subcarriers are sequentially #0, #1, ..., and #131). The foregoing one subcarrier may be a subcarrier #66 in the first downlink frequency domain unit.

In some other embodiments, the first value is determined based on parity of a quantity of RBs in the first downlink frequency domain unit. In this case, the index of the foregoing one subcarrier indicates the subcarrier from one RB in the first downlink frequency domain unit. Optionally, the RB is located in the first downlink frequency domain unit, and an absolute value of a difference between a quantity of RBs whose frequencies are lower than a frequency of the RB and a quantity of RBs whose frequencies are higher than the frequency of the RB in the first downlink frequency domain unit is equal to 0 or 1.

For example, an index $n_{PRB}$ of the resource block in which the subcarrier is located and that is in the first downlink frequency domain unit meets the following Formula (7): $n_{PRB} = \left\lceil \dfrac{N_{RB}}{2} \right\rceil$ , where $N_{RB}$ is a quantity of RBs in the first downlink frequency domain unit.

For example, the first downlink frequency domain unit includes 11 RBs (indices of the RBs are sequentially #0, #1, ..., and ^#10), and the foregoing one RB is an RB #5. For another example, the first downlink frequency domain unit includes 12 RBs (indices of the RBs are sequentially #0, #1, ..., and ^#11). The foregoing one RB is an RB #6.

For example, when the quantity $N_{RB}$ of RBs in the first downlink frequency domain unit is an odd number, in other words, when $N_{RB}\ mod\ 2 = 1$, the first value is equal to half of a quantity of subcarriers in the resource block, or the first value is equal to 6. For example, it is assumed that the foregoing one resource block includes 12 subcarriers. In this case, the first value may be 6. When the quantity $N_{RB}$ of RBs in the first downlink frequency domain unit is an even number, in other words, when $N_{RB}\ mod\ 2 = 0$, the first value is equal to 0 or a quantity of subcarriers in the resource block. For example, it is assumed that the first resource block includes 12 subcarriers. In this case, the first value may be 0 (or 12).

It may be understood that, for Manner 1, the index of the foregoing one subcarrier is the first value, so that the frequency of the subcarrier may be 0 (that is, the subcarrier is the direct current subcarrier). For Manner 2 and Manner 3, the index of the foregoing one subcarrier is the first value, so that the subcarrier is at a center position of the first downlink frequency domain unit. This ensures that an uplink backscatter signal is symmetric about a center of the subcarrier. In this way, spectrum usage efficiency is improved.

In still some embodiments, the index of the foregoing one subcarrier may be a second value, and the second value may be determined based on a first value and an offset. For example, the second value may be a sum of the first value and the offset. It should be understood that the offset may be a positive value or a negative value. When the offset is a negative value, the second value may be represented as a difference between the first value and the offset.

It should be noted that, to ensure that points A of CRBs in different numerologies are aligned, the offset may be determined based on a subcarrier spacing of the first OFDM time domainsignal and a maximum subcarrier spacing. Formula (5) is an example of the offset $k_0^{\mu}$ , and the index $k$ of the foregoing one subcarrier may meet, for example,

$$k = N_{grid}^{size,\mu} N_{sc}^{RB}/2 - k_0^{\mu}\ .$$

It should be understood that the index k of the subcarrier in any one of the foregoing examples may be defined in a protocol, may be predefined in the first device and/or the second device, or may be preconfigured by a network device through signaling configuration. This is not limited in this application.

In some embodiments, the offset may alternatively be a preset value, and the preset value may be, for example, half a subcarrier.

In some embodiments, the offset may alternatively be determined based on the subcarrier spacing of the first OFDM time domain signal, the maximum subcarrier spacing, and the preset value. The preset value may be, for example, half a subcarrier. In this case, the Formula (4) may be

$$s_l^{(p,\mu)}(t) = \sum_{k=0}^{N_{grid}^{size,\mu} N_{sc}^{RB}-1} a_{k,l}^{(p,\mu)} \cdot e^{j2\pi\left(k+k_0^{\mu}-N_{grid}^{size,\mu} N_{sc}^{RB}/2+1/2\right)\Delta f\left(t-N_{CP,l}^{\mu} T_c - t_{start,l}^{\mu}\right)}\ .\quad \text{or}$$

$$s_l^{(p,\mu)}(t) = \sum_{k=0}^{N_{grid}^{size,\mu} N_{sc}^{RB}-1} a_{k,l}^{(p,\mu)} \cdot e^{j2\pi\left(k+k_0^{\mu}-N_{grid}^{size,\mu} N_{sc}^{RB}/2-1/2\right)\Delta f\left(t-N_{CP,l}^{\mu} T_c - t_{start,l}^{\mu}\right)}\ .$$

For example, in S220, that the first device sends the first OFDM time domain signal to the second device may be that the first device may perform up-conversion on the first OFDM time domain signal and then send a first OFDM time domain signal obtained through the up-conversion to the second device. The carrier signal in the foregoing content may be obtained by performing the up-conversion on the first OFDM time domain signal.

In S230, the second device may perform the backscatter communication based on the first OFDM time domain signal, so that the second device sends the uplink signal to the first device. For example, the second device may perform signal modulation on the first OFDM time domain signal or a carrier signal corresponding to the first OFDM time domain signal, includes, by using the carrier signal, uplink data that needs to be transmitted, and send the uplink data to the first device.

It should be noted that execution time of S220 and execution time of S230 partially overlap. For example, the first device sends the first OFDM time domain signal to the second device, and the second device may send the uplink signal to the first device in the backscatter communication manner in a process of receiving the first OFDM time domain signal.

It may be understood that, when the first device finishes sending the first OFDM time domain signal to the second device, the second device stops sending the uplink signal because the second device loses a carrier signal that can be used for backscatter. Similarly, before receiving the first OFDM time domainsignal sent by the first device, the second device cannot send the uplink signal to the first device in the backscatter communication manner. In other words, a time domain resource occupied for sending the uplink signal to the first device by the second device in the backscatter communication manner should be a subset of a time domain resource occupied for sending the first OFDM time domain signal to the second device by the first device.

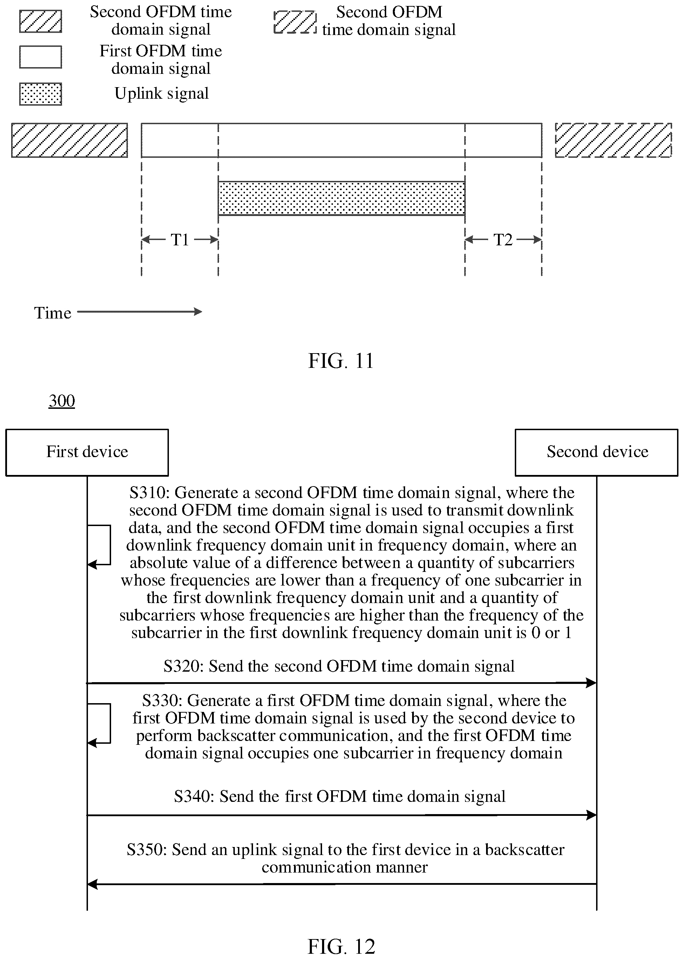

With reference to FIG. 11, a time domain start position of the uplink signal is later than a time domain start position of the first OFDM time domain signal, and/or a time domain end position of the uplink signal is earlier than a time domain end position of the first OFDM time domain signal. For example, there is an interval of a first time domain length T1 between the time domain start position of the uplink signal and the time domain start position of the first OFDM time domain signal, and/or there is an interval of a second time domain length T2 between the time domain end position of the uplink signal and the time domain end position of the first OFDM time domain signal.

To improve passive IoT transmission reliability, the first time domain length T1 should be related to at least one of the following:

a transmission delay between the first device and the second device;
time for processing the first OFDM time domain signal by the second device; and
time for generating the uplink signal by the second device (for example, time for preparing uplink data that needs to be backscattered).

The first time domain length T1 may be, for example, one of the foregoing related items, a sum of all or some of the foregoing related items, a maximum value of the foregoing related items, or a minimum value of the foregoing related items.

The second time domain length T2 should be related to at least one of the following:

time for processing the received uplink signal by the first device; and
time for preparing, by the first device, a first OFDM time domain signal that needs to be sent subsequently.

The second time domain length T2 may be, for example, one of the foregoing two related items, a sum of the foregoing two related items, a larger value of the foregoing two related items, or a smaller value of the foregoing two related items.

FIG. 12 is a schematic interaction flowchart of a communication method 300 according to an embodiment of this application. The method 300 shown in FIG. 12 is described by using the method 200 shown in FIG. 7 as an example. Certainly, that the method 300 shown in FIG. 12 can be implemented only on the basis of the method 200 shown in FIG. 7 is not limited in this embodiment. As shown in FIG. 12, the method 300 may include some or all of S310 to S350. S330 to S350 are respectively in one-to-one correspondence with S210 to S230 in the embodiment shown in FIG. 7, and technical means and to-be-implemented technical effects thereof are similar. Details are not described herein again.

An execution sequence of steps in FIG. 12 is not limited in this embodiment. Generally, S310 and S320 may be performed before a first device starts to send a first OFDM time domain signal, or may be performed after the first device finishes sending a first OFDM time domain signal.

In some embodiments, a second OFDM time domain signal may be downlink signaling indicating a second device to perform backscatter communication. In this case, S310 and S320 may be performed before the first OFDM time domain signal starts to be sent, as shown in FIG. 11. Optionally, there may be a time domain interval between the second OFDM time domain signal and the first OFDM time domain signal, or there may be no time domain interval between the second OFDM time domain signal and the first OFDM time domain signal. This is not limited in this embodiment. In FIG. 11, after sending of the first OFDM time domain signal ends, the second OFDM time domain signal indicating the second device to perform next backscatter communication may be sent. The second OFDM time domain signal is marked with a dashed box in FIG. 11.

The following describes S310 and S320 in the method 300.

In S310, the first device generates the second OFDM time domain signal. The second OFDM time domain signal is used to transmit downlink signaling and/or data, and the second OFDM time domain signal occupies a first downlink frequency domain unit in frequency domain. For example, the first device may map a to-be-transmitted element to a plurality of subcarriers (or a plurality of REs) in the first downlink frequency domain unit.

Optionally, the second OFDM time domain signal may be an OFDM time domain signal corresponding to the downlink signaling and/or the data. For example, the first device may perform up-conversion on the second OFDM time domain signal and then send a second OFDM time domain signal obtained through the up-conversion to the second device.

Further, to improve frequency usage efficiency, an absolute value of a difference between a quantity of subcarriers whose frequencies are lower than a frequency of the foregoing one subcarrier in the first downlink frequency domain unit and a quantity of subcarriers whose frequencies are higher than the frequency of the subcarrier in the first downlink frequency domain unit is 0 or 1.

In a first example, the first downlink frequency domain unit does not include a subcarrier with a lowest frequency in a first frequency domain resource. With reference to FIG. 13a, for example, the first frequency domain resource includes 12 subcarriers (a subcarrier #0 to a subcarrier #11), frequencies of the subcarrier #0 to the subcarrier #11 increase sequentially, and a frequency of the subcarrier #0 may be, for example, 0. The first downlink frequency domain unit includes 11 subcarriers (a subcarrier #1 to the subcarrier #11) other than the subcarrier #0. In other words, a downlink signal is not mapped to the subcarrier #0, so that the downlink signal may be center-symmetric about the subcarrier #6, and the subcarrier #6 is also a subcarrier carrying the first OFDM time domain symbol. When the downlink signal is modulated by using a double sideband, downlink spectrum usage efficiency can be improved.

In a second example, when a downlink signal is modulated by using a double sideband, the first downlink frequency domain unit includes each subcarrier on which frequency offset is performed based on a preset value in a first frequency domain resource, to improve the downlink spectrum frequency usage efficiency. With reference to FIG. 13b, for example, the first frequency domain resource includes 12 subcarriers (a subcarrier #0 to a subcarrier #11). It is assumed that the preset value is half a subcarrier, and each subcarrier included in the first downlink frequency domain unit has an offset of half a subcarrier based on the preset value. For example, a subcarrier spacing is 15 kHz, and in this case, the preset value is 7.5 kHz. It may be understood that the preset value may be a positive value or a negative value. When the preset value is a positive value, each subcarrier in the first downlink frequency domain unit has an offset of a distance of the preset value in a direction with a higher frequency. When the preset value is a negative value, each subcarrier in the first downlink frequency domain unit has an offset of a distance of the preset value in a direction with a lower frequency.

In the second example, to ensure that a signal generation manner of the second OFDM time domain symbol is consistent with a signal generation manner of the first OFDM time domain symbol, an index of the foregoing one subcarrier is a second value, and an offset used to determine the second value should be determined based on at least the preset value. For example, the offset may be the preset value, or the offset may be determined based on the preset value, a subcarrier spacing of the first OFDM time domain signal, and a maximum subcarrier spacing. For details, refer to descriptions of the second value or the offset in the foregoing embodiments. The details are not described herein again.

Further, in the foregoing second example, when the index of the foregoing one subcarrier is the second value, and the offset used to determine the second value includes at least the preset value, in a process in which the first device performs phase compensation in Manner 3, a first time domain resource is at least two subframes (for example, two subframes or subframes whose quantity is an integer multiple of 2). In other words, in Manner 3, a periodicity in which the first device performs OFDM symbol-by-OFDM symbol phase compensation should be at least two subframes (or 2 ms). For example, a value range of an index $l$ of an OFDM symbol may be modified to $\{0, 1, \ldots MN_{\text{slot}}^{\text{subframe},\mu} N_{\text{symb}}^{\text{slot}} - 1\}$, where M is 2 or an integer multiple of 2. Phase compensation is performed by using at least two subframes (or 2 ms) as the periodicity, so that it can be ensured that a phase change in a compensation periodicity is an integer multiple of $2\pi$. This further ensures phase continuity between two different subframes (or 2 ms).

Therefore, in both the first example and the second example, the first downlink frequency domain unit may be center-symmetric about one subcarrier carrying the first OFDM time domain signal. This improves frequency usage efficiency. In the second example, frequency offset is performed on all subcarriers in the first frequency resource as a whole. This can ensure that all subcarriers can be used to transmit the downlink signal. In this way, spectrum usage efficiency can be further improved.

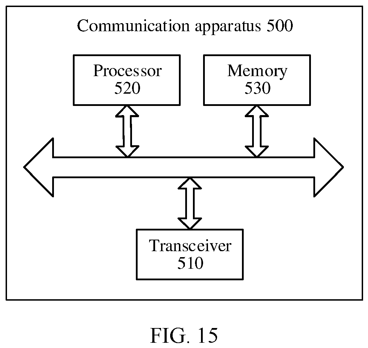

The foregoing describes in detail the methods provided in embodiments of this application with reference to FIG. 7 to FIG. 13. The following describes in detail apparatuses provided in embodiments of this application with reference to FIG. 14 and FIG. 15.

FIG. 14 is a block diagram of a communication apparatus according to an embodiment of this application. As shown in FIG. 14, the apparatus 400 may include a transceiver unit 410 and a processing unit 420.

Optionally, the communication apparatus 400 may correspond to the first device in the foregoing method embodiments, for example, may be the first device, or a part (for example, a chip, a chip system, or the like) disposed in the first device.

It should be understood that the communication apparatus 400 may correspond to the first device in the method 200 shown in FIG. 7 or in the method 300 shown in FIG. 12 according to embodiments of this application, and the communication apparatus 400 may include a unit configured to perform the method performed by the first device in the method 200 in FIG. 7 or in the method 300 shown in FIG. 12. In addition, each unit in the communication apparatus 400 and the foregoing other operations and/or functions are separately intended to implement corresponding procedures of the method 200 in FIG. 7 or the method 300 in FIG. 12.

When the communication apparatus 400 is configured to perform the method 200 in FIG. 7 or the method 300 in FIG. 12, the processing unit 420 may be configured to generate a first OFDM time domain signal. The first OFDM time domain signal is used by a second device to perform backscatter communication, and the first OFDM time domain signal occupies one subcarrier in frequency domain. The transceiver unit 410 may be configured to send the first OFDM time domain signal to the second device.

In some embodiments, the processing unit 420 is specifically configured to perform transform precoding on a first sequence, to obtain a second sequence. One element in the second sequence is non-zero, an element other than the element in the second sequence is zero, and the non-zero element in the second sequence is mapped to the subcarrier.

In some embodiments, the processing unit 420 is further configured to generate a second OFDM time domain signal. The second OFDM time domain signal is used to transmit downlink data, and the second OFDM time domain signal occupies a first downlink frequency domain unit in frequency domain. An absolute value of a difference between a quantity of subcarriers whose frequencies are lower than a frequency of the subcarrier in the first downlink frequency domain unit and a quantity of subcarriers whose frequencies are higher than the frequency of the subcarrier in the first downlink frequency domain unit is 0 or 1.

It should be understood that the transceiver unit 410 may be configured to perform step 220 and step 230 in the method shown in FIG. 7, and the processing unit 420 may be configured to perform step 210 in the method shown in FIG. 7. The transceiver unit 410 may be configured to perform step 320, step 340, and step 350 in the method shown in FIG. 12, and the processing unit 420 may be configured to perform step 310 and step 330 in the method shown in FIG. 12. It should be understood that a specific process of performing the foregoing corresponding steps by each unit is described in detail in the foregoing method embodiments. For brevity, details are not described herein again.

Optionally, the communication apparatus 400 may correspond to the second device in the foregoing method embodiments, for example, may be the second device, or a part (for example, a chip, a chip system, or the like) disposed in the second device.

It should be understood that the communication apparatus 400 may correspond to the second device in the method 200 shown in FIG. 7 or in the method 300 shown in FIG. 12 according to embodiments of this application, and the communication apparatus 400 may include a unit configured to perform the method performed by the second device in the method 200 in FIG. 7 or in the method 300 shown in FIG. 12. In addition, each unit in the communication apparatus 400 and the foregoing other operations and/or functions are separately intended to implement corresponding procedures of the method 200 in FIG. 7 or the method 300 in FIG. 12.

When the communication apparatus 400 is configured to perform the method in FIG. 12, the transceiver unit 410 may be configured to receive a first OFDM time domain signal from a first device. The first OFDM time domain signal occupies one subcarrier in frequency domain. The transceiver unit 410 is further configured to send an uplink signal to the first device in a backscatter communication manner. A radio frequency carrier of the uplink signal is determined based on a radio frequency carrier of the first OFDM time domain signal.

In some embodiments, the radio frequency carrier of the uplink signal is the same as the radio frequency carrier of the first OFDM time domain signal, or an offset value exists between the radio frequency carrier of the uplink signal and the radio frequency carrier of the first OFDM time domain signal.

In some embodiments, the transceiver unit 410 is further configured to receive a second OFDM time domain signal from the first device. The second OFDM time domain signal is used to transmit downlink data, and the second OFDM time domain signal occupies a first downlink frequency domain unit in frequency domain. An absolute value of a difference between a quantity of subcarriers whose frequencies are lower than a frequency of the subcarrier in the first downlink frequency domain unit and a quantity of subcarriers whose frequencies are higher than the frequency of the subcarrier in the first downlink frequency domain unit is 0 or 1.

In some embodiments, the transceiver unit 410 is further configured to send the uplink signal to the first device. A time domain start position of the uplink signal is later than a time domain start position of the first OFDM time domain signal, and/or a time domain end position of the uplink signal is earlier than a time domain end position of the first OFDM time domain signal.

It should be understood that the transceiver unit 420 may be configured to perform step 220 and step 230 in the method 200 shown in FIG. 7, or step 320, step 340, and step 350 in the method 300 shown in FIG. 12. It should be understood that a specific process of performing the foregoing corresponding steps by each unit is described in detail in the foregoing method embodiments. For brevity, details are not described herein again.

In some embodiments, the frequency of the subcarrier is zero.

In some embodiments, the first OFDM time domain signal does not include a cyclic prefix.

In some embodiments, the first OFDM time domain signal includes a cyclic prefix.

In some embodiments, the first OFDM time domain signal includes a first OFDM symbol and a second OFDM symbol in time domain, the first OFDM symbol is adjacent to the second OFDM symbol, and the first OFDM symbol and the second OFDM symbol are continuous in phase.

In some embodiments, a time domain start position of the second OFDM symbol is determined based on a time domain start position of the first OFDM symbol, an index of the second OFDM symbol in a first time domain resource, and duration of the first OFDM symbol; and the index of the second OFDM symbol in the first time domain resource is an integer greater than or equal to 0.

In some embodiments, the first time domain resource is a time domain resource used to transmit the first OFDM time domain signal.

In some embodiments, the first time domain resource is at least one subframe.

In some embodiments, the subcarrier is located in the first downlink frequency domain unit. The absolute value of the difference between the quantity of subcarriers whose frequencies are lower than the frequency of the subcarrier in the first downlink frequency domain unit and the quantity of subcarriers whose frequencies are higher than the frequency of the subcarrier in the first downlink frequency domain unit is 0 or 1. The first downlink frequency domain unit is used by the communication apparatus to communicate with the second device.

In some embodiments, an index of the subcarrier is a first value; or an index of the subcarrier is a second value, and the second value is determined based on a first value and an offset.

In some embodiments, the first value is determined based on parity of a quantity of resource blocks in the first downlink frequency domain unit.

In some embodiments, an index of a resource block in which the subcarrier is located and that is in the first downlink frequency domain unit meets the following formula: $n_{\mathrm{PRB}} = \left\lfloor \frac{N_{\mathrm{RB}}}{2} \right\rfloor$ , where $N_{\mathrm{RB}}$ is the quantity of resource blocks in the first downlink frequency domain unit, and $\llcorner \lrcorner$ represents rounding down.

In some embodiments, when the quantity of resource blocks in the first downlink frequency domain unit is an odd number, the first value is equal to half of a quantity of subcarriers in a resource block or the first value is equal to 6; or when the quantity of resource blocks in the first downlink frequency domain unit is an even number, the first value is equal to 0 or a quantity of subcarriers in a resource block.

In some embodiments, the first value is equal to half of the quantity of subcarriers in the first downlink frequency domain unit.

In some embodiments, the second value is a sum of the first value and the offset, and the offset is determined based on at least one of the following: a subcarrier spacing of the first OFDM time domain signal and a maximum subcarrier spacing; or a preset value.

In some embodiments, in the first downlink frequency domain unit, an element carried on each subcarrier other than the subcarrier is zero.

In some embodiments, the first downlink frequency domain unit does not include a subcarrier with a lowest frequency in a first frequency domain resource, and the first frequency domain resource is used by the communication apparatus to communicate with the second device; or the first downlink frequency domain unit includes each subcarrier on which frequency offset is performed based on the preset value in the first frequency domain resource.

In some embodiments, the transceiver unit 410 is further configured to receive an uplink signal from the second device. A time domain start position of the uplink signal is later than a time domain start position of the first OFDM time domain signal, and/or a time domain end position of the uplink signal is earlier than a time domain end position of the first OFDM time domain signal.

In some embodiments, there is an interval of a first time domain length between the time domain start position of the uplink signal and the time domain start position of the first OFDM time domain signal, and/or there is an interval of a second time domain length between the time domain end position of the uplink signal and the time domain end position of the first OFDM time domain signal.

When the communication apparatus 400 is the first device, the transceiver unit 410 in the communication apparatus 400 may be implemented by using a transceiver, for example, may correspond to a transceiver 510 in a communication apparatus 500 shown in FIG. 15. The processing unit 420 in the communication apparatus 400 may be implemented by using at least one processor, for example, may correspond to a processor 520 in the communication apparatus 500 shown in FIG. 15.

When the communication apparatus 400 is the second device, the transceiver unit 410 in the communication apparatus 400 may be implemented by using a transceiver, for example, may correspond to a transceiver 510 in a communication apparatus 500 shown in FIG. 15. The processing unit 420 in the communication apparatus 400 may be implemented by using at least one processor, for example, may correspond to a processor 520 in the communication apparatus 500 shown in FIG. 15.

When the communication apparatus 400 is a chip or a chip system disposed in a communication device (for example, the first device or the second device), the transceiver unit 410 in the communication apparatus 400 may be implemented by using an input/output interface, a circuit, or the like, and the processing unit 420 in the communication apparatus 400 may be implemented by using a processor, a microprocessor, an integrated circuit, or the like integrated in the chip or the chip system.

FIG. 15 is another block diagram of a communication apparatus according to an embodiment of this application. As shown in FIG. 15, the communication apparatus 500 may include a transceiver 510, a processor 520, and a memory 530. The transceiver 510, the processor 520, and the memory 530 communicate with each other through an internal connection path. The memory 530 is configured to store instructions. The processor 520 is configured to execute the instructions stored in the memory 530, to control the transceiver 510 to send a signal and/or receive a signal.

It should be understood that the communication apparatus 500 may correspond to the first device or the second device in the foregoing method embodiments, and may be configured to perform steps and/or procedures performed by the first device or the second device in the foregoing method embodiments. Optionally, the memory 530 may include a read-only memory and a random access memory, and provide instructions and data for the processor. A part of the memory may further include a non-volatile random access memory. The memory 530 may be a separate component, or may be integrated in the processor 520. The processor 520 may be configured to execute the instructions stored in the memory 530, and when the processor 520 executes the instructions stored in the memory, the processor 520 is configured to perform steps and/or procedures corresponding to the first device or the second device in the method embodiments.

Optionally, the communication apparatus 500 is the first device in the foregoing embodiments.

Optionally, the communication apparatus 500 is the second device in the foregoing embodiments.

The transceiver 510 may include a transmitter and a receiver. The transceiver 510 may further include an antenna, and there may be one or more antennas. The processor 520, the memory 530, and the transceiver 510 may be components integrated in different chips. For example, the processor 520 and the memory 530 may be integrated in a baseband chip, and the transceiver 510 may be integrated in a radio frequency chip. The processor 520, the memory 530, and the transceiver 510 may alternatively be components integrated in a same chip. This is not limited in this application.

Optionally, the communication apparatus 500 is a part disposed in the first device, for example, a chip, a chip system, or the like.

Optionally, the communication apparatus 500 is a part disposed in the second device, for example, a chip, a chip system, or the like.

The transceiver 520 may alternatively be a communication interface, for example, an input/output interface, a circuit, or the like. The transceiver 520, the processor 510, and the memory 530 may all be integrated in a same chip, for example, integrated in a baseband chip.

This application further provides a processing apparatus, including at least one processor. The at least one processor is configured to execute a computer program stored in a memory, so that the processing apparatus performs the method performed by the first device in the foregoing method embodiments or the second device.

An embodiment of this application further provides a processing apparatus, including a processor and an input/output interface. The input/output interface is coupled to the processor. The input/output interface is configured to input and/or output information. The information includes at least one of instructions and data. The processor is configured to execute a computer program, so that the processing apparatus performs the method performed by the first device in the foregoing method embodiments or the second device.

An embodiment of this application further provides a processing apparatus, including a processor and a memory. The memory is configured to store a computer program, and the processor is configured to invoke the computer program from the memory and run the computer program, so that the processing apparatus performs the method performed by the first device in the foregoing method embodiments or the second device.

It should be understood that the processing apparatus may be one or more chips. For example, the processing apparatus may be a field programmable gate array (field programmable gate array, FPGA), an application-specific integrated circuit (application-specific integrated circuit, ASIC), a system on chip (system on chip, SoC), a central processing unit (central processing unit, CPU), a network processor (network processor, NP), a digital signal processing circuit (digital signal processor, DSP), a micro controller (micro controller unit, MCU), a programmable controller (programmable logic device, PLD), or another integrated chip.

In an implementation process, steps of the foregoing methods can be completed by using a hardware integrated logic circuit in the processor, or by using instructions in a form of software. The steps of the methods disclosed with reference to embodiments of this application may be directly embodied as being performed by a hardware processor, or may be performed by a combination of hardware and software modules in the processor. The software module may be located in a mature storage medium in the art, such as a random access memory, a flash memory, a read-only memory, a programmable read-only memory, an electrically erasable programmable memory, a register, or the like. The storage medium is located in the memory. The processor reads information in the memory, and completes the steps of the foregoing methods in combination with hardware in the processor. To avoid repetition, details are not described herein again.

It should be noted that the processor in embodiments of this application may be an integrated circuit chip and has a signal processing capability. In an implementation process, steps in the foregoing method embodiments can be completed by using a hardware integrated logic circuit in the processor, or by using instructions in a form of software. The processor may be a general-purpose processor, a digital signal processor (DSP), an application-specific integrated circuit (ASIC), a field programmable gate array (FPGA) or another programmable logic device, a discrete gate or a transistor logic device, or a discrete hardware component. The methods, the steps, and the logic block diagrams disclosed in embodiments of this application may be implemented or performed. The general-purpose processor may be a microprocessor, or the processor may be any conventional processor or the like. The steps of the methods disclosed with reference to embodiments of this application may be directly embodied as being performed by a hardware decoding processor, or may be performed by a combination of hardware and software modules in the decoding processor. The software module may be located in a mature storage medium in the art, such as a random access memory, a flash memory, a read-only memory, a programmable read-only memory, an electrically erasable programmable memory, a register, or the like. The storage medium is located in the memory. The processor reads information in the memory, and completes the steps of the foregoing methods in combination with hardware in the processor.

It should be understood that the memory in embodiments of this application may be a volatile memory or a non-volatile memory, or may include both a volatile memory and a non-volatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), and is used as an external cache. Through example but not limitative description, many forms of RAMs may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the system and method described in this specification is intended to include but be not limited to these memories and any other memory of a proper type.

According to the method provided in embodiments of this application, this application further provides a computer program product. The computer program product includes computer program code. When the computer program code is run on a computer, the computer is caused to perform the method performed by the first device or the second device in the foregoing method embodiments.

According to the method provided in embodiments of this application, this application further provides a computer-readable storage medium. The computer-readable storage medium stores program code. When the program code is run on a computer, the computer is caused to perform the method performed by the first device or the second device in the foregoing method embodiments.

According to the method provided in embodiments of this application, this application further provides a communication system. The communication system may include the foregoing first device and/or second device.

Terms such as "part", "module", "system" or the like used in this specification are used to indicate computer-related entities, hardware, firmware, combinations of hardware and software, software, or software being executed. For example, a part may be, but is not limited to, a process running on a processor, a processor, an object, an executable file, an execution thread, a program, and/or a computer. As illustrated by using figures, both an application running on a computing device and the computing device may be parts. One or more parts may reside in the process and/or the execution thread, and the parts may be located on one computer and/or distributed between two or more computers. In addition, these parts may be executed from various computer-readable media that store various data structures. The parts may communicate by using a local and/or remote process and based on, for example, a signal having one or more data packets (for example, data from two parts interacting with another part in a local system, a distributed system, and/or across a network such as an internet interacting with other systems by using the signal).

A person of ordinary skill in the art may be aware that, with reference to the examples described in embodiments disclosed in this specification, units and algorithm steps can be implemented by electronic hardware or a combination of computer software and electronic hardware. Whether these functions are performed by the hardware or the software depends on particular applications and design constraints of the technical solutions. A person skilled in the art may use different methods to implement the described functions for each particular application, but it should not be considered that this implementation goes beyond the scope of this application.

It may be clearly understood by a person skilled in the art that, for the purpose of convenient and brief description, for detailed working processes of the foregoing system, apparatus, and unit, refer to corresponding processes in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logic function division and may be another division in actual implementation. For example, a plurality of units or components may be combined or integrated into another system, or some features may be ignored or not performed. In addition, the displayed or discussed mutual couplings or direct couplings or communication connections may be implemented by using some interfaces. The indirect couplings or communication connections between the apparatus or units may be implemented in electronic, mechanical, or other forms.

Units described as separate parts may or may not be physically separate, and parts displayed as units may or may not be physical units, may be located in one place, or may be distributed on a plurality of network units. Some or all of the units may be selected based on actual requirements to achieve the objectives of the solutions of embodiments.

In addition, function units in embodiments of this application may be integrated into one processing unit, each of the units may exist alone physically, or two or more units may be integrated into one unit.

When the functions are implemented in a form of a software function unit and sold or used as an independent product, the functions may be stored in one computer-readable storage medium. Based on this understanding, a part that essentially contributes to the technical solutions of this application or a part of the technical solutions may be embodied in a form of a software product. The computer software product is stored in a storage medium, and includes several instructions that cause a computer device (which may be a personal computer, a server, a network device, or the like) to perform all or some of steps of the method in embodiments of this application. The foregoing storage medium includes any medium that can store program code, such as a USB flash drive, a removable hard disk, a ROM, a RAM, a magnetic disk, an optical disc, or the like.

The foregoing descriptions are merely specific implementations of this application, but are not intended to limit the protection scope of this application. A modification or replacement readily figured out by a person skilled in the art within the technical scope disclosed in this application shall fall within the protection scope of this application. Therefore, the protection scope of this application shall be subject to the protection scope of the claims.

**Claims**

1. A communication method, wherein the method comprises:

   generating, by a first device, a first orthogonal frequency division multiplexing OFDM time domain signal, wherein the first OFDM time domain signal is used by a second device to perform backscatter communication, and the first OFDM time domain signal occupies one subcarrier in frequency domain; and
   sending, by the first device, the first OFDM time domain signal to the second device.

2. The method according to claim 1, wherein a frequency of the subcarrier is zero.

3. The method according to claim 1 or 2, wherein the first OFDM time domain signal does not comprise a cyclic prefix.

4. The method according to claim 1 or 2, wherein the first OFDM time domain signal comprises a cyclic prefix.

5. The method according to claim 4, wherein the first OFDM time domain signal comprises a first OFDM symbol and a second OFDM symbol in time domain, the first OFDM symbol is adjacent to the second OFDM symbol, and the first OFDM symbol and the second OFDM symbol are continuous in phase.

6. The method according to claim 5, wherein a time domain start position of the second OFDM symbol is determined based on a time domain start position of the first OFDM symbol, an index of the second OFDM symbol in a first time domain resource, and duration of the first OFDM symbol; and the index of the second OFDM symbol in the first time domain resource is an integer greater than or equal to 0.

7. The method according to claim 6, wherein the first time domain resource is a time domain resource used to transmit the first OFDM time domain signal.

8. The method according to claim 6 or 7, wherein the first time domain resource is at least one subframe.

9. The method according to any one of claims 1 to 8, wherein the method further comprises:

performing, by the first device, transform precoding on a first sequence, to obtain a second sequence, wherein one element in the second sequence is non-zero, an element other than the element in the second sequence is zero, and the non-zero element in the second sequence is mapped to the subcarrier.

10. The method according to any one of claims 1 to 9, wherein

an index of the subcarrier is a first value; or
an index of the subcarrier is a second value, and the second value is determined based on a first value and an offset.

11. The method according to claim 10, wherein an index $n_{\mathrm{PRB}}$ of a resource block in which the subcarrier is located and

$$n_{\mathrm{PRB}} = \left\lfloor \frac{N_{\mathrm{RB}}}{2} \right\rfloor$$

that is in a first downlink frequency domain unit meets the following formula: , wherein $N_{\mathrm{RB}}$ is a quantity of resource blocks in the first downlink frequency domain unit, $\lfloor \ \rfloor$ represents rounding down; and the first downlink frequency domain unit is used by the first device to communicate with the second device.

12. The method according to claim 11, wherein when the quantity of resource blocks in the first downlink frequency domain unit is an odd number, the first value is equal to half of a quantity of subcarriers in one resource block; or when the quantity of resource blocks in the first downlink frequency domain unit is an even number, the first value is equal to zero or a quantity of subcarriers in one resource block.

13. The method according to claim 10, wherein the first value is equal to half of a quantity of subcarriers in a first downlink frequency domain unit.

14. The method according to any one of claims 10 to 13, wherein the second value is a sum of the first value and the offset, and the offset is determined based on at least one of the following:

a subcarrier spacing of the first OFDM time domain signal and a maximum subcarrier spacing; or
a preset value.

15. The method according to any one of claims 11 to 13, wherein in the first downlink frequency domain unit, an element carried on each subcarrier other than the subcarrier is zero.

16. A communication method, wherein the method comprises:

receiving, by a second device, a first OFDM time domain signal from a first device, wherein the first OFDM time domain signal occupies one subcarrier in frequency domain; and
sending, by the second device, an uplink signal to the first device in a backscatter communication manner, wherein a radio frequency carrier of the uplink signal is determined based on a radio frequency carrier of the first OFDM time domain signal.

17. The method according to claim 16, wherein the radio frequency carrier of the uplink signal is the same as the radio frequency carrier of the first OFDM time domain signal, or an offset value exists between the radio frequency carrier of the uplink signal and the radio frequency carrier of the first OFDM time domain signal.

18. The method according to claim 16 or 17, wherein a frequency of the subcarrier is zero.

19. The method according to claim 16 or 17, wherein the first OFDM time domain signal does not comprise a cyclic prefix.

20. The method according to claim 16 or 17, wherein the first OFDM time domain signal comprises a cyclic prefix.

21. The method according to claim 20, wherein the first OFDM time domain signal comprises a first OFDM symbol and a second OFDM symbol in time domain, the first OFDM symbol is adjacent to the second OFDM symbol, and the first OFDM symbol and the second OFDM symbol are continuous in phase.

22. The method according to claim 21, wherein a time domain start position of the second OFDM symbol is determined based on a time domain start position of the first OFDM symbol, an index of the second OFDM symbol in a first time domain resource, and duration of the first OFDM symbol; and the index of the second OFDM symbol in the first time domain resource is an integer greater than or equal to 0.

23. The method according to claim 22, wherein the first time domain resource is a time domain resource used to transmit the first OFDM time domain signal.

24. The method according to claim 22 or 23, wherein the first time domain resource is at least one subframe.

25. The method according to any one of claims 16 to 24, wherein

an index of the subcarrier is a first value; or
an index of the subcarrier is a second value, and the second value is determined based on a first value and an offset.

26. The method according to claim 25, wherein an index $n_{\mathrm{PRB}}$ of a resource block in which the subcarrier is located and that is in a first downlink frequency domain unit meets the following formula: $n_{\mathrm{PRB}} = \left\lfloor \frac{N_{\mathrm{RB}}}{2} \right\rfloor$ , wherein $N_{\mathrm{RB}}$ is a quantity of resource blocks in the first downlink frequency domain unit, $\lfloor \ \rfloor$ represents rounding down; and the first downlink frequency domain unit is used by the second device to communicate with the first device.

27. The method according to claim 26, wherein when the quantity of resource blocks in the first downlink frequency domain unit is an odd number, the first value is equal to half of a quantity of subcarriers in one resource block; or when the quantity of resource blocks in the first downlink frequency domain unit is an even number, the first value is equal to zero or a quantity of subcarriers in one resource block.

28. The method according to claim 25, wherein the first value is equal to half of a quantity of subcarriers in a first downlink frequency domain unit.

29. The method according to any one of claims 25 to 28, wherein the second value is a sum of the first value and the offset, and the offset is determined based on at least one of the following:

a subcarrier spacing of the first OFDM time domain signal and a maximum subcarrier spacing; or
a preset value.

30. The method according to any one of claims 26 to 28, wherein in the first downlink frequency domain unit, an element carried on each subcarrier other than the subcarrier is zero.

31. A communication apparatus, comprising:

a processing unit, configured to generate a first OFDM time domain signal, wherein the first OFDM time domain signal is used by a second device to perform backscatter communication, and the first OFDM time domain signal occupies one subcarrier in frequency domain; and
a transceiver unit, configured to send the first OFDM time domain signal to the second device.

32. The apparatus according to claim 31, wherein a frequency of the subcarrier is zero.

33. The apparatus according to claim 31, wherein the first OFDM time domain signal does not comprise a cyclic prefix.

34. The apparatus according to claim 31, wherein the first OFDM time domain signal comprises a cyclic prefix.

35. The apparatus according to claim 34, wherein the first OFDM time domain signal comprises a first OFDM symbol and a second OFDM symbol in time domain, the first OFDM symbol is adjacent to the second OFDM symbol, and the first OFDM symbol and the second OFDM symbol are continuous in phase.

36. A communication apparatus, comprising:

a transceiver unit, configured to receive a first OFDM time domain signal from a first device, wherein the first OFDM time domain signal occupies one subcarrier in frequency domain, wherein
the transceiver unit is further configured to send an uplink signal to the first device in a backscatter communication manner, wherein a radio frequency carrier of the uplink signal is determined based on a radio frequency carrier of the first OFDM time domain signal.

37. A communication device, comprising a processor and a memory, wherein the memory is configured to store a computer program, and the processor is configured to invoke and run the computer program stored in the memory, to perform the method according to any one of claims 1 to 30.

38. A chip, comprising a processor, configured to invoke computer instructions from a memory and run the computer instructions, to cause a device in which the chip is installed to perform the method according to any one of claims 1 to 30.

39. A computer-readable storage medium, configured to store computer program instructions, wherein the computer program causes a computer to perform the method according to any one of claims 1 to 30.

40. A computer program product, comprising computer program instructions, wherein the computer program instructions cause a computer to perform the method according to any one of claims 1 to 30.

41. An apparatus, comprising a logic circuit and an input/output interface, wherein the input/output interface is configured to receive a signal from a communication apparatus other than the apparatus and transmit the signal to the logic circuit, or send a signal from the logic circuit to a communication apparatus other than the apparatus, and the logic circuit is configured to execute code instructions to implement the method according to any one of claims 1 to 30.

FIG. 1

FIG. 2a

FIG. 2b

Central control
unit

Fronthaul link
(downlink
signaling)

Reverse
link

Fronthaul link
(uplink signaling)

Reader

Forward link

Tag

FIG. 2c

Power
amplifier

Send an amplitude
modulation signal

Signal
transmitting end

D

Signal receiving
end

Envelope of the
amplitude
modulation signal

C

R

Output a
modulation
signal

Reader

Low noise amplifier

Tag

FIG. 3

Power amplifier

Send a carrier signal

Logic
processor

Radio
frequency
receiver

Signal
transmitting
end

Signal
receiving end

Clock

Demodulator

Reader

Low noise amplifier

Backscatter signal

Tag

FIG. 4

Frequency

Point A

k=11
k=10
k=9
k=8
k=7
k=6
k=5
k=4
k=3
k=2
k=1
k=0

CRB #2
CRB #1
CRB #0

12 subcarriers

FIG. 5

Carrier

BWP

$N_{\text{BWP},i}^{\text{size},\mu}$

$N_{\text{BWP},i}^{\text{start},\mu}$

PRB #8
PRB #7
PRB #6
PRB #5
PRB #4
PRB #3
PRB #2
PRB #1

CRB #16
CRB #15
CRB #14
CRB #13
CRB #12
CRB #11
CRB #10
CRB #9
CRB #8
CRB #7
CRB #6
CRB #5
CRB #4
CRB #3
CRB #2
CRB #1

Frequency

Point A

FIG. 6

200

| First device | | Second device |

S210: Generate a first OFDM time domain signal, where the first OFDM time domain signal is used by the second device to perform backscatter communication, and the first OFDM time domain signal occupies one subcarrier in frequency domain

S220: Send the first OFDM time domain signal

S230: Send an uplink signal to the first device in a backscatter communication manner

FIG. 7

| Subcarrier mapping | → | IFFT | → | Insert a CP | →

FIG. 8a

| Transform precoding | → | Subcarrier mapping | → | IFFT | → | Insert a CP | →

FIG. 8b

Time

←———— OFDM symbol #m ————→←———— OFDM symbol #m+1 ————→

| CP | | CP | |

Phase discontinuity

FIG. 9

Time

←———— OFDM symbol #m ————→←——— OFDM symbol #m+1 ———→

| CP | | CP | |

First OFDM time
domain signal

FIG. 10a

Time

OFDM symbol #m ———————— OFDM symbol #m+1

FIG. 10b

Time

OFDM symbol #m ———————— OFDM symbol #m+1

| CP | | CP | |

FIG. 10c

▨ Second OFDM time domain signal     ▨ Second OFDM time domain signal

☐ First OFDM time domain signal

▨ Uplink signal

← T1 →        ← T2 →

Time ─────────►

**FIG. 11**

300

| First device | Second device |

S310: Generate a second OFDM time domain signal, where the second OFDM time domain signal is used to transmit downlink data, and the second OFDM time domain signal occupies a first downlink frequency domain unit in frequency domain, where an absolute value of a difference between a quantity of subcarriers whose frequencies are lower than a frequency of one subcarrier in the first downlink frequency domain unit and a quantity of subcarriers whose frequencies are higher than the frequency of the subcarrier in the first downlink frequency domain unit is 0 or 1

S320: Send the second OFDM time domain signal

S330: Generate a first OFDM time domain signal, where the first OFDM time domain signal is used by the second device to perform backscatter communication, and the first OFDM time domain signal occupies one subcarrier in frequency domain

S340: Send the first OFDM time domain signal

S350: Send an uplink signal to the first device in a backscatter communication manner

**FIG. 12**

Center frequency of one
subcarrier carrying a first
OFDM time domain signal

Frequency

Subcarrier

| 0 | 1 | 2 | 3 | 4 | 5 | 6 | 7 | 8 | 9 | 10 | 11 |

First downlink frequency domain unit

First frequency domain resource

FIG. 13a

Center frequency of one
subcarrier carrying a first
OFDM time domain signal

Frequency

Subcarrier

| 0 | 1 | 2 | 3 | 4 | 5 | 6 | 7 | 8 | 9 | 10 | 11 |

First downlink frequency domain unit

First frequency domain resource

FIG. 13b

Communication apparatus 400

Transceiver unit 410

Processing unit 420

FIG. 14

FIG. 15

## INTERNATIONAL SEARCH REPORT

| International application No. |
|---|
| **PCT/CN2022/142035** |

**A.     CLASSIFICATION OF SUBJECT MATTER**

H04L 27/26(2006.01)i

According to International Patent Classification (IPC) or to both national classification and IPC

**B.     FIELDS SEARCHED**

Minimum documentation searched (classification system followed by classification symbols)

IPC:H04L

Documentation searched other than minimum documentation to the extent that such documents are included in the fields searched

Electronic data base consulted during the international search (name of data base and, where practicable, search terms used)

3GPP, CNTXT, ENTXTC, CNKI, DWPI: 反射, 反向散射, 射频, 阅读器, 标签, 正交频分复用, 子载波, 相位, 连续, 起始, 索引, 激励, blackscatter, exciter, RFID, reader, lag, OFDM, subcarrier, phase, beginning, starting, index

**C.     DOCUMENTS CONSIDERED TO BE RELEVANT**

| Category* | Citation of document, with indication, where appropriate, of the relevant passages | Relevant to claim No. |
|---|---|---|
| X | CN 113315729 A (HUAWEI TECHNOLOGIES CO., LTD.) 27 August 2021 (2021-08-27) description, paragraphs 5-156 | 1-5, 16-21, 31-41 |
| A | CN 113315729 A (HUAWEI TECHNOLOGIES CO., LTD.) 27 August 2021 (2021-08-27) description, paragraphs 5-156 | 6-15, 22-30 |
| X | CN 110224965 A (UNIVERSITY OF ELECTRONIC SCIENCE AND TECHNOLOGY OF CHINA) 10 September 2019 (2019-09-10) description, paragraphs 26-52 | 1-5, 16-21, 31-41 |
| X | CN 106506426 A (UNIVERSITY OF ELECTRONIC SCIENCE AND TECHNOLOGY OF CHINA) 15 March 2017 (2017-03-15) description, paragraphs 6-79 | 1-5, 16-21, 31-41 |
| A | WO 2020244392 A1 (HUAWEI TECHNOLOGIES CO., LTD.) 10 December 2020 (2020-12-10) entire document | 1-41 |
| A | WO 2021169586 A1 (HUAWEI TECHNOLOGIES CO., LTD.) 02 September 2021 (2021-09-02) entire document | 1-41 |

☐ Further documents are listed in the continuation of Box C.          ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **07 March 2023** | **10 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

## INTERNATIONAL SEARCH REPORT
### Information on patent family members

International application No.

**PCT/CN2022/142035**

| Patent document cited in search report | | | Publication date (day/month/year) | Patent family member(s) | | | Publication date (day/month/year) |
|---|---|---|---|---|---|---|---|
| CN | 113315729 | A | 27 August 2021 | None | | | |
| CN | 110224965 | A | 10 September 2019 | None | | | |
| CN | 106506426 | A | 15 March 2017 | None | | | |
| WO | 2020244392 | A1 | 10 December 2020 | None | | | |
| WO | 2021169586 | A1 | 02 September 2021 | EP | 4087204 | A1 | 09 November 2022 |
| | | | | US | 2022390393 | A1 | 08 December 2022 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202210103513X